(19) **Europäisches Patentamt / European Patent Office / Office européen des brevets**

(11) **EP 4 593 517 A1**

(12) **EUROPEAN PATENT APPLICATION**
published in accordance with Art. 153(4) EPC

(43) Date of publication:
**30.07.2025 Bulletin 2025/31**

(51) International Patent Classification (IPC):
**H04W 76/15** (2018.01)   **H04L 65/612** (2022.01)

(21) Application number: **23876792.5**

(52) Cooperative Patent Classification (CPC):
**H04L 65/612; H04W 52/02; H04W 76/15;**
**Y02D 30/70**

(22) Date of filing: **12.10.2023**

(86) International application number:
**PCT/CN2023/124328**

(87) International publication number:
**WO 2024/078593 (18.04.2024 Gazette 2024/16)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 14.10.2022   CN 202211262326
27.10.2022   CN 202211330156

(71) Applicant: **Huawei Technologies Co., Ltd.**
**Shenzhen, Guangdong 518129 (CN)**

(72) Inventors:
• **LIN, Yousi**
**Shenzhen, Guangdong 518129 (CN)**
• **GAN, Ming**
**Shenzhen, Guangdong 518129 (CN)**

(74) Representative: **Maiwald GmbH**
**Engineering**
**Elisenhof**
**Elisenstrasse 3**
**80335 München (DE)**

(54) **COMMUNICATION METHOD AND COMMUNICATION APPARATUS**

(57)    Embodiments of this application are applied to, for example, a wireless local area network system that supports a next-generation Wi-Fi protocol of IEEE 802.11ax, for example, 802.11be, Wi-Fi 7, or EHT. Embodiments of this application are applied to, for another example, a wireless local area network system that supports 802.11 series protocols such as a next-generation protocol of 802.11be, Wi-Fi 8, UHR, and Wi-Fi AI. Embodiments of this application may alternatively be applied to a UWB-based wireless personal area network system, a sensing system, or the like. Embodiments of this application provide a communication method and apparatus. In the method, a transmit MLD sends a first element to a receive MLD by using a link, where the first element includes first information and second information. The second information more clearly indicates links on which TWT SPs aligned with an individual TWT SP on a reference link indicated by the first information need to be set up, thereby specifying a method for setting up aligned individual TWT SPs on a plurality of links by using one link.

FIG. 8

# Description

This application claims priorities to Chinese Patent Application No. 202211262326.2, filed with the China National Intellectual Property Administration on October 14, 2022 and entitled "COMMUNICATION METHOD AND COMMUNICATION APPARATUS", and to Chinese Patent Application No. 202211330156.7, filed with the China National Intellectual Property Administration on October 27, 2022 and entitled "COMMUNICATION METHOD AND COMMUNICATION APPARATUS", both of which are incorporated herein by reference in their entireties.

## TECHNICAL FIELD

This application relates to the communication field, and more specifically, to a communication method and a communication apparatus.

## BACKGROUND

A target wake time (target wake time, TWT) is an energy-saving technology. A core idea is to set some periodic time periods, so that some devices need to stay active only in these time periods, and may sleep in other time periods, thereby implementing energy saving. These active time periods are referred to as TWT service periods (service periods, SPs). Each of two multi-link devices (multi-link devices, MLDs) that support multi-link communication may set up an individual TWT SP on each of a plurality of links, and each individual TWT SP may include a plurality of TWT service periods that occur periodically.

Some MLD devices can operate on only one link at a time. When the MLD devices perform link switchover, a TWT period set up on a previous link is not expected to be interrupted. Therefore, it is a reasonable solution to set up aligned individual TWT SPs on a plurality of links. However, currently, a method for setting up individual TWT SPs on a plurality of links associated with two MLDs by using one link associated with the two MLDs is provided, and a method for setting up aligned individual TWT SPs on a plurality of links by using one link is not clearly provided.

## SUMMARY

This application provides a communication method and a communication apparatus, to specify a method for setting up aligned individual TWT SPs on a plurality of links by using one link.

According to a first aspect, a communication method is provided. The method may be performed by a receive device, or may be performed by a chip or a circuit configured in the receive device. This is not limited in this application. For ease of description, an example in which the method is performed by the receive device is used below for description.

The method may include: The receive device receives a first frame, where the first frame includes a first element, the first element is used to request to set up an individual target wake time TWT service period SP, and the first element includes first information and second information; the first information indicates a first link on which an individual TWT SP is requested to be set up, the second information indicates N second links on which individual TWT SPs are requested to be set up, the N second individual TWT SPs set up on the N second links need to be aligned with the first individual TWT SP on the first link, and the N second individual TWT SPs one-to-one correspond to the N second links; and the first link and the second link are communication links between a transmit device and the receive device, the N second links are different links, and N is a positive integer. The receive device sets up the first individual TWT SP on the first link and sets up the N second individual TWT SPs on the N second links based on the first element. The receive device performs communication on the corresponding links based on the first individual TWT SP and the N second individual TWT SPs.

It should be understood that, that the first individual TWT SP is aligned with the second individual TWT SP means that times (namely, times at which data is sent and received) at which the devices wake in the two individual TWP SPs are aligned.

It should be further understood that the transmit device may send the first frame on any link associated with the transmit device and the receive device. Correspondingly, the receive device may receive the first frame on the any link.

In the foregoing technical solution, the second information indicates links on which aligned individual TWT SPs need to be set up, and the first information indicates that a plurality of individual TWT SPs are aligned on a plurality of links by using the first link as a reference link. Therefore, a method for setting up aligned individual TWT SPs on a plurality of links by using one link is specified.

In some implementations of the first aspect, the first element includes third information, the third information indicates information about the first individual TWT SP, and the information about the first individual TWT SP includes a start time of the first individual TWT SP. The setting up the first individual TWT SP on the first link and setting up the N second individual TWT SPs on the N second links based on the first element includes: The receive device sets up the first individual TWT SP on the first link based on the information about the first individual TWT SP. The receive device determines information about the N second individual TWT SPs, where the information about the second individual TWT SP includes a start time of the second individual TWT SP, and the start time of the second individual TWT SP is determined based on the start time of the first individual TWT SP. The receive device sets up the N second individual TWT SPs on the N second links based on the information about the N second individual TWT SPs.

Optionally, the information about the first individual TWT SP further includes a wake interval of the first individual TWT SP and wake duration in each wake interval.

It should be understood that, when the first individual TWT SP and the second individual TWT SP are aligned, wake intervals of the two individual TWT SPs are the same and duration of the SPs in a wake interval are the same. In this case, the receive device may determine a wake interval of the first individual TWT SP and duration of the SP in a wake interval based on the wake interval of the first individual TWT SP and duration of the SP in a wake interval.

In the foregoing technical solution, the first element includes the information about the individual TWT SP on the reference link. The receive device may separately determine, by using the start time of the reference link as an alignment criterion, corresponding moments that are of the start time of the reference link and that are in time axes of the N second links.

In some implementations of the first aspect, after the start time of the second individual TWT SP is determined based on the start time of the first individual TWT SP, the second individual TWT SP is aligned with the first individual TWT SP.

In some implementations of the first aspect, the start time $TWT_j$ of the second individual TWT SP satisfies the following formula: $TWT_j = TWT_i + TWT_{offset}$, where $TWT_i$ is the start time of the first individual TWT SP, and a value of $TWT_{offset}$ is equal to a difference between a time synchronization function TSF timer of the first link and a TSF timer of the second link.

In some implementations of the first aspect, the first element further includes fourth information, and the fourth information indicates that the first element includes the second information.

In the foregoing technical solution, the receive device can be clearly notified by using the fourth information whether the first element is used to set up aligned TWT SPs. This helps the receive device quickly determine whether the aligned TWT SPs need to be set up.

In some implementations of the first aspect, when the first element is a TWT element, the fourth information is an aligned TWT field in a control field of the TWT element.

In some implementations of the first aspect, when the first element is the TWT element, the first information is a link ID bitmap field or a link ID field in a TWT parameter information field of the TWT element, and the second information is an aligned TWT bitmap field in the TWT parameter information field.

In some implementations of the first aspect, the method further includes: The receive device sends a second frame, where the second frame includes a second element, the second element includes fifth information, and the fifth information indicates that the receive device confirms accepting setup of the individual TWT SPs on the first link and the N second links.

According to a second aspect, a communication method is provided. The method may be performed by a transmit device, or may be performed by a chip or a circuit configured in the transmit device. This is not limited in this application. For ease of description, an example in which the method is performed by the transmit device is used below for description.

The method may include: The transmit device generates a first frame, where the first frame includes a first element, the first element is used to request to set up an individual target wake time TWT service period SP, and the first element includes first information and second information; the first information indicates a first link on which an individual TWT SP is requested to be set up, the second information indicates N second links on which individual TWT SPs are requested to be set up, the N second individual TWT SPs set up on the N second links need to be aligned with the first individual TWT SP on the first link, and the N second individual TWT SPs one-to-one correspond to the N second links; and the first link and the second link are communication links between the transmit device and a receive device, the N second links are different links, and N is a positive integer. The transmit device sends the first frame.

For beneficial effect of the second aspect, refer to the descriptions of the first aspect. Details are not described herein again.

In some implementations of the second aspect, the first element includes third information, the third information indicates information about the first individual TWT SP, and the information about the first individual TWT SP includes a start time of the first individual TWT SP.

In some implementations of the second aspect, that the second individual TWT SP is aligned with the first individual TWT SP includes aligning a start time of the first individual TWT SP with the start time of the first individual TWT SP.

In some implementations of the second aspect, the first element further includes fourth information, and the fourth information indicates that the first element includes the second information.

In some implementations of the second aspect, when the first element is a TWT element, the fourth information is an aligned TWT subfield in a control field of the TWT element.

In some implementations of the second aspect, when the first element is the TWT element, the first information is a link ID bitmap field or a link ID field in a TWT parameter information field of the TWT element, and the second information is an aligned TWT bitmap subfield in the TWT parameter information field.

In some implementations of the second aspect, the method further includes: The transmit device receives a second frame, where the second frame includes a second element, the second element includes fifth information, and the fifth information indicates that the receive device confirms accepting setup of the individual TWT SPs on the first link and the N second links.

According to a third aspect, a communication method is provided. The method may be performed by a receive device, or may be performed by a chip or a circuit configured in the receive device. This is not limited in this application. For ease of description, an example in which the method is performed by the receive device is used below for description.

The method may include: The receive device receives a first frame, where the first frame includes M first elements, the first element is used to request to set up an individual TWT SP, and the first element includes first information and second information; the first information indicates a target link on which an individual target wake time TWT service period SP is requested to be set up, the second information indicates information about the target individual TWT SP on the target link, and M target individual TWT SPs corresponding to the M first elements are aligned; and the target link is a communication link between a transmit device and the receive device, and M is an integer greater than 1. The receive device sets up the M target individual TWT SPs on M target links based on information about the M target individual TWT SPs included in the M first elements, where the M target links are different links. The receive device performs communication on the corresponding links based on the M target individual TWT SPs.

It should be understood that, that the M target individual TWT SPs are aligned means that times (namely, times at which data is sent and received) at which the devices wake in the M individual TWP SPs are aligned.

It should be further understood that the transmit device may send the first frame on any link associated with the transmit device and the receive device. Correspondingly, the receive device may receive the first frame on the any link.

In the foregoing technical solution, the second information already directly includes the information about the target individual TWT SP on the corresponding target link (namely, a link on which the individual TWT SP needs to be aligned). Therefore, the receive device needs to set up aligned individual TWT SPs on the M target links by using one link by reading only parameters included in the second information, and does not need to perform additional calibration, thereby reducing energy consumption of the receive device.

In some implementations of the third aspect, the first element further includes third information, and the third information indicates that the first information indicates the target link.

In the foregoing technical solution, the receive device can be clearly notified by using the third information whether each first element indicates a target link for setting up an aligned TWT SP. This helps the receive device quickly determine whether the link indicated by the first information is a link on which the aligned TWT SP needs to be set up.

In some implementations of the third aspect, when the first element is a TWT element, the third information is an aligned TWT field in a control field of the TWT element.

In some implementations of the third aspect, when the first element is the TWT element, the first information is a link ID bitmap field in a TWT parameter information field of the TWT element, and the second information is the TWT parameter information field.

In some implementations of the third aspect, when the first element is the TWT element, the first information is an aligned TWT bitmap field in a TWT parameter information field of the TWT element, and the second information is the TWT parameter information field.

In some implementations of the third aspect, the method further includes: The receive device sends a second frame, where the second frame includes a second element, the second element includes fourth information, and the fourth information indicates that the receive device confirms accepting setup of the individual TWT SPs on the M target links corresponding to the M first elements.

According to a fourth aspect, a communication method is provided. The method may be performed by a transmit device, or may be performed by a chip or a circuit configured in the transmit device. This is not limited in this application. For ease of description, an example in which the method is performed by the transmit device is used below for description.

The method may include: The transmit device generates a first frame, where the first frame includes M first elements, the first element is used to request to set up an individual TWT SP, and the first element includes first information and second information; the first information indicates a target link on which an individual wake time TWT service period SP is requested to be set up, the second information indicates information about the target individual TWT SP on the target link, and M target individual TWT SPs corresponding to the M first elements are aligned; and the target link is a communication link between the transmit device and a receive device, and M is an integer greater than 1. The transmit device sends the first frame.

For beneficial effect of the fourth aspect, refer to the descriptions of the third aspect. Details are not described herein again.

In some implementations of the fourth aspect, the information about the target individual TWT SP includes a start time of the target individual TWT SP, and the start time $TWT_j$ of the target individual TWT SP satisfies the following formula: $TWT_j = TWT_i + TWT_{offset}$, where $TWT_i$ is a moment at which the start time of the target individual TWT SP is mapped to a time axis of a reference link, a value of $TWT_{offset}$ is equal to a difference between a TSF timer of the reference link and a TSF timer of the target link, and the reference link is any link in communication links between the transmit device and the receive device.

In the foregoing technical solution, the transmit device separately determines, by using the time axis of the reference link as a reference standard according to the foregoing formula, corresponding moments of $TWT_i$ on time axes of M target links. For each link, the transmit end performs calibration only once. Therefore, complexity of calculating a start time of an aligned individual TWT SP on each link can be reduced.

In some implementations of the fourth aspect, the first element further includes third information, and the third information indicates that the first information indicates the target link.

In some implementations of the fourth aspect, when the first element is a TWT element, the third information is an aligned TWT field in a control field of the TWT element.

In some implementations of the fourth aspect, when the first element is the TWT element, the first information is a link ID bitmap field in a TWT parameter information field of the TWT element, and the second information is the TWT parameter information field.

In some implementations of the fourth aspect, when the first element is the TWT element, the first information is an aligned TWT bitmap field in a TWT parameter information field of the TWT element, and the second information is the TWT parameter information field.

In some implementations of the fourth aspect, the method further includes: The transmit device receives a second frame, where the second frame includes a second element, the second element includes fourth information, and the fourth information indicates that the receive device confirms accepting setup of the individual TWT SPs on the M target links corresponding to the M first elements.

According to a fifth aspect, a communication method is provided. The method may be performed by a receive device, or may be performed by a chip or a circuit configured in the receive device. This is not limited in this application. For ease of description, an example in which the method is performed by the receive device is used below for description.

The method may include: The receive device receives a first frame on a first link, where the first frame includes a first element, the first element is used to request to set up an individual target wake time TWT service period SP, and the first element includes second information; the second information indicates N second links on which individual TWT SPs are requested to be set up, the N second individual TWT SPs set up on the N second links need to be aligned, and the N second individual TWT SPs one-to-one correspond to the N second links; and the N second links are different links, N is a positive integer, and the first link and the second link are communication links between a transmit device and the receive device. The receive device sets up the N aligned second individual TWT SPs on the N second links by using the first link as a reference link. The receive device performs communication on the corresponding links based on the N second individual TWT SPs.

In the foregoing technical solution, the second information indicates links on which aligned individual TWT SPs need to be set up, and a plurality of individual TWT SPs are aligned on a plurality of links by using the first link on which the first frame is transmitted as the reference link. Therefore, a method in which the transmit device sets up, with the receive device by using one link, aligned individual TWT SPs on a plurality of links is specified.

In some implementations of the fifth aspect, the first element includes third information, the third information indicates information about a first individual TWT SP on the first link, and the information about the first individual TWT SP includes a start time of the first individual TWT SP. The setting up the N aligned second individual TWT SPs on the N second links by using the first link as a reference link includes: The receive device determines information about the N second individual TWT SPs, where the information about the second individual TWT SP includes a start time of the second individual TWT SP, and the start time of the second individual TWT SP is determined based on the start time of the first individual TWT SP. The receive device sets up the N second individual TWT SPs on the N second links based on the information about the N second individual TWT SPs.

It should be noted that, in the method, even if the information about the first individual TWT SP is configured, the first individual TWT SP may not be actually set up on the first link. The information about the first individual TWT SP on the first link is used as only reference information, to set up the aligned individual TWT SPs on the second links indicated by the second information. If the N second links indicated by the second information include the first link, the first individual TWT SP is actually set up on the first link. If the N second links indicated by the second information do not include the first link, no first individual TWT SP is set up on the first link. In this case, the first individual TWT SP may be considered as a virtual individual TWT SP, and is only a reference TWT SP for setting up the aligned individual TWT SPs.

In some implementations of the fifth aspect, the second individual TWT SP is aligned with the first individual TWT SP after the start time of the second individual TWT SP is determined based on the start time of the first individual TWT SP.

In some implementations of the fifth aspect, the start time $TWT_j$ of the second individual TWT SP satisfies the following formula:

$$\mathrm{TWT}_j = \mathrm{TWT}_i + \mathrm{TWT}_{\mathrm{offset}},$$

where

$TWT_i$ is the start time of the first individual TWT SP, and a value of $TWT_{offset}$ is equal to a difference between a time synchronization function TSF timer of the first link and a TSF timer of the second link.

In some implementations of the fifth aspect, the first element further includes fourth information, and the fourth information indicates that the first element includes the second information.

In some implementations of the fifth aspect, when the first element is a TWT element, the fourth information is an aligned TWT field in a control field of the TWT element.

In some implementations of the fifth aspect, when the first element is the TWT element, the second information is an aligned TWT bitmap field in a TWT parameter information field.

In some implementations of the fifth aspect, the method further includes: The receive device sends a second frame, where the second frame includes a second element, the second element includes fifth information, and the fifth information indicates that the receive device confirms accepting setup of the individual TWT SPs on the N second links.

According to a sixth aspect, a communication method is provided. The method may be performed by a transmit device, or may be performed by a chip or a circuit configured in the transmit device. This is not limited in this application. For ease of description, an example in which the method is performed by the transmit device is used below for description.

The method may include: The transmit device generates a first frame, where the first frame includes a first element, the first element is used to request to set up an individual target wake time TWT service period SP, and the first element includes second information; the second information indicates N second links on which individual TWT SPs are requested to be set up, the N second individual TWT SPs set up on the N second links need to be aligned, and the N second individual TWT SPs one-to-one correspond to the N second links; and the N second links are different links, and N is a positive integer. The transmit device sends the first frame on a first link, where the N second individual TWT SPs are aligned by using the first link as a reference link, and the first link and the second link are communication links between the transmit device and a receive device.

For beneficial effect of the sixth aspect, refer to descriptions of the fifth aspect. Details are not described herein again.

In some implementations of the sixth aspect, the first element includes third information, the third information indicates information about a first individual TWT SP on the first link, and the information about the first individual TWT SP includes a start time of the first individual TWT SP.

In some implementations of the fifth aspect, that the second individual TWT SP is aligned with the first individual TWT SP includes aligning a start time of the first individual TWT SP with the start time of the first individual TWT SP.

In some implementations of the sixth aspect, the first element further includes fourth information, and the fourth information indicates that the first element includes the second information.

In some implementations of the sixth aspect, when the first element is a TWT element, the fourth information is an aligned TWT subfield in a control field of the TWT element.

In some implementations of the sixth aspect, when the first element is the TWT element, the second information is an aligned TWT bitmap subfield in a TWT parameter information field.

In some implementations of the sixth aspect, the method further includes: The transmit device receives a second frame, where the second frame includes a second element, the second element includes fifth information, and the fifth information indicates that the receive device confirms accepting setup of the individual TWT SPs on the N second links.

According to a seventh aspect, a communication apparatus is provided. The apparatus is configured to perform the method provided in the first aspect or the third aspect. Specifically, the apparatus may include a module configured to perform any one of the first aspect and the possible implementations of the first aspect, any one of the third aspect and the possible implementations of the third aspect, or any one of the fifth aspect and the possible implementations of the fifth aspect.

According to an eighth aspect, a communication apparatus is provided. The apparatus is configured to perform the method provided in the second aspect or the fourth aspect. Specifically, the apparatus may include a module configured to perform any one of the second aspect and the possible implementations of the second aspect, any one of the fourth aspect and the possible implementations of the fourth aspect, or any one of the sixth aspect and the possible implementations of the sixth aspect.

According to a ninth aspect, a communication apparatus is provided, including a processor. The processor is coupled to a memory, and may be configured to execute instructions in the memory, to implement the method in any one of the first aspect and the possible implementations of the first aspect, or implement the method in any one of the third aspect and the possible implementations of the third aspect, or implement the method in any one of the fifth aspect and the possible implementations of the fifth aspect. Optionally, the apparatus further includes the memory. Optionally, the apparatus further includes a communication interface, and the processor is coupled to the communication interface.

In an implementation, the apparatus is a receive device. When the apparatus is a sending device, the communication interface may be a transceiver or an input/output interface.

In another implementation, the apparatus is a chip configured in a receive device. When the apparatus is a chip configured in a sending device, the communication interface may be an input/output interface.

In another implementation, the apparatus is a chip or a chip system.

Optionally, the transceiver may be a transceiver circuit. Optionally, the input/output interface may be an input/output circuit.

According to a tenth aspect, a communication apparatus is provided, including a processor. The processor may be configured to execute instructions in a memory, to implement the method in any one of the second aspect and the possible implementations of the second aspect, or implement the method in any one of the fourth aspect and the possible implementations of the fourth aspect, or implement the method in any one of the sixth aspect and the possible implementations of the sixth aspect. Optionally, the apparatus further includes the memory. Optionally, the apparatus further includes a communication interface, and the processor is coupled to the communication interface.

In an implementation, the apparatus is a transmit device. When the apparatus is a receiving device, the communication interface may be a transceiver or an input/output interface.

In another implementation, the apparatus is a chip configured in a transmit device. When the apparatus is a chip configured in a receiving device, the communication interface may be an input/output interface.

In another implementation, the apparatus is a chip or a chip system.

Optionally, the transceiver may be a transceiver circuit. Optionally, the input/output interface may be an input/output circuit.

According to an eleventh aspect, a computer-readable storage medium is provided. The computer-readable storage medium stores computer instructions. When the computer instructions are executed by an apparatus, the apparatus is enabled to implement the method in any one of the first aspect and the possible implementations of the first aspect, the apparatus is enabled to implement the method in any one of the third aspect and the possible implementations of the third aspect, or the apparatus is enabled to implement the method in any one of the fifth aspect and the possible implementations of the fifth aspect.

According to a twelfth aspect, a computer-readable storage medium is provided. The computer-readable storage medium stores computer instructions. When the computer instructions are executed by an apparatus, the apparatus is enabled to implement the method in any one of the second aspect and the possible implementations of the second aspect, the apparatus is enabled to implement the method in any one of the fourth aspect and the possible implementations of the fourth aspect, or the apparatus is enabled to implement the method in any one of the sixth aspect and the possible implementations of the sixth aspect.

According to a thirteenth aspect, a computer program product including instructions is provided. The computer program product includes a computer program. When the computer program is executed by an apparatus, the apparatus is enabled to implement the method provided in any one of the first aspect and the possible implementations of the first aspect, the apparatus is enabled to implement the method in any one of the third aspect and the possible implementations of the third aspect, or the apparatus is enabled to implement the method in any one of the fifth aspect and the possible implementations of the fifth aspect.

According to a fourteenth aspect, a computer program product including instructions is provided. The computer program product includes a computer program. When the computer program is executed by an apparatus, the apparatus is enabled to implement the method provided in any one of the second aspect and the possible implementations of the second aspect, the apparatus is enabled to implement the method in any one of the fourth aspect and the possible implementations of the fourth aspect, or the apparatus is enabled to implement the method in any one of the sixth aspect and the possible implementations of the sixth aspect.

According to a fifteenth aspect, a communication system is provided, including the foregoing transmit device and the foregoing receive device.

**BRIEF DESCRIPTION OF DRAWINGS**

FIG. 1 is a schematic diagram of an application scenario to which an embodiment of this application is applicable;
FIG. 2 is a schematic diagram of a multi-link communication scenario;
FIG. 3 is a schematic diagram of an individual TWT SP;
FIG. 4 is a schematic diagram of setting up a TWT agreement between two MLDs through negotiation;
FIG. 5 is a schematic diagram of a structure of a TWT element;
FIG. 6 is a schematic diagram of an individual TWT parameter information field;
FIG. 7 is a schematic diagram of a broadcast TWT parameter information field;
FIG. 8 is a schematic block diagram of a communication method according to an embodiment of this application;
FIG. 9 is a schematic diagram of aligning individual TWT SPs on a plurality of links;
FIG. 10 is a schematic diagram of field designs of first information and second information in a TWT element according to this application;
FIG. 11 is a schematic diagram of other field designs of first information and second information in a TWT element according to this application;

FIG. 12 is a schematic diagram of a field design of fourth information in a TWT element according to this application;

FIG. 13 is a schematic diagram of another field design of fourth information in a TWT element according to this application;

FIG. 14 is a schematic diagram of still another field design of fourth information in a TWT element according to this application;

FIG. 15 is a schematic diagram of yet another field design of fourth information in a TWT element according to this application;

FIG. 16 is a schematic block diagram of another communication method according to an embodiment of this application;

FIG. 17 is a schematic block diagram of still another communication method according to an embodiment of this application;

FIG. 18 is a schematic block diagram of a communication apparatus 200 according to an embodiment of this application;

FIG. 19 is a schematic block diagram of a communication apparatus 300 according to an embodiment of this application; and

FIG. 20 is a schematic diagram of a chip system 1300 according to an embodiment of this application.

## DESCRIPTION OF EMBODIMENTS

The following describes technical solutions of this application with reference to accompanying drawings.

The technical solutions provided in embodiments of this application are applicable to a wireless local area network (wireless local area network, WLAN) scenario. For example, IEEE 802.11-related standards such as the 802.11a/b/g standard, the 802.11n standard, the 802.11ac standard, the 802.11ax standard, a next-generation Wi-Fi protocol of IEEE 802.11ax such as 802.11be, Wi-Fi 7, extremely high throughput (extremely high throughput, EHT), 802.11ad, 802.11ay, or 802.11bf, are supported. For another example, a next-generation protocol of 802.11be or Wi-Fi 8, is supported. The technical solutions provided in embodiments of this application may be further applied to an ultra wide band (ultra wide band, UWB)-based wireless personal area network system, for example, the 802.15 series standards, or may be further applied to a sensing (sensing) system, for example, the 802.11bf series standards. The 802.11n standard is referred to as a high throughput (high throughput, HT), the 802.11ac standard is referred to as a very high throughput (very high throughput, VHT), the 802.11ax standard is referred to as high efficiency (high efficient, HE), and the 802.11be standard is referred to as an extremely high throughput (extremely high throughput, EHT). 802.11bf includes two major categories of standards: a low frequency (Sub-7 GHz) and a high frequency (60 GHz). Sub-7 GHz is implemented mainly based on standards such as 802.11ac, 802.11ax, 802.11be, and a next-generation standard of 802.11be. 60 GHz is implemented mainly based on standards such as 802.11ad, 802.11ay, and a next-generation standard of 802.11ay. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a fifth generation (5th generation, 5G) system or new radio (new radio, NR), a future sixth generation (6th generation, 6G) system, the internet of things (internet of things, IoT) network, or the vehicle-to-everything (vehicle to x, V2X).

The foregoing communication systems applicable to this application are merely examples for description, and communication systems applicable to this application are not limited thereto. This is stated herein once for all, and is not repeated below.

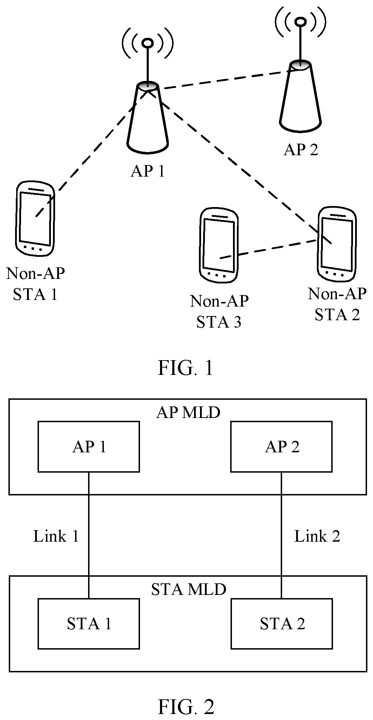

FIG. 1 is a schematic diagram of an application scenario to which an embodiment of this application is applicable. As shown in FIG. 1, a resource configuration method provided in this application is applicable to data communication between stations (stations, STAs). The station may be an access point (access point, AP) station, or may be a non-access point station (non-access point station, non-AP STA). The access point station and the non-access point station are briefly referred to as an AP and a non-AP station, respectively. Specifically, the solutions in this application are applicable to data communication between an AP and one or more non-AP stations (for example, data communication between an AP 1 and a non-AP STA 1 and a non-AP STA 2), and are also applicable to data communication between APs (for example, data communication between the AP 1 and an AP 2) and data communication between non-AP STAs (for example, data communication between the non-AP STA 2 and a non-AP STA 3).

The access point may be an access point used by a terminal (for example, a mobile phone) to access a wired (or wireless) network, and is mainly deployed at home, in a building, and in a campus. A typical coverage radius is tens of meters or more than 100 meters. Certainly, the access point may alternatively be deployed outdoors. The access point is equivalent to a bridge that connects the wired network and the wireless network. A main function of the access point is to connect various wireless network clients together and then connect the wireless network to the Ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a future 6G network, a network device in a public land mobile network (public land mobile network, PLMN), or the like. This is not limited in embodiments of this application. The access point may be a device that supports a Wi-Fi standard. For example, the access point may alternatively support one or more standards of the institute of electrical and electronics engineers (Institute of Electrical and Electronics Engineers, IEEE) 802.11 family, such as 802.11a, 802.11b, 802.11g, 802.11n, 802.11ac, 802.11ax, 802.11be, 802.11ad, and 802.11ay.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an internet of things device, a wearable device, a terminal device in the 5G network, a terminal device in the future 6G network, a terminal device in the PLMN, or the like. This is not limited in embodiments of this application. The non-AP station may be a device that supports a WLAN standard. For example, the non-AP station may support one or more standards of the IEEE 802.11 family, such as 802.11a, 802.11b, 802.11g, 802.11n, 802.11ac, 802.11ax, 802.11be, 802.11ad, and 802.11ay.

For example, the non-AP station may be a mobile phone, a tablet computer, a set-top box, a smart television, a smart wearable device, a vehicle-mounted communication device, a computer, an internet of things (internet of things, IoT) node, a sensor, a smart camera, a smart remote control, or a smart water/electricity meter in a smart home, and a sensor in a smart city.

The AP or the non-AP station may include a transmitter, a receiver, a memory, a processor, and the like. The transmitter and the receiver are respectively configured to send and receive packet structures. The memory is configured to store signaling information, store a preset value agreed in advance, and the like. The processor is configured to parse the signaling information, process related data, and the like.

The foregoing communication systems applicable to this application are merely examples for description, and communication systems applicable to this application are not limited thereto. This is stated herein once for all, and is not repeated below.

For ease of understanding embodiments of this application, the following first describes several nouns or terms in this application.

1. Multi-link communication: A next-generation WLAN standard develops and evolves towards continuously improving a throughput. A WLAN system standard is mainly studied and discussed in the IEEE 802.11 standard working group. Based on the previous standard protocol 802.11a/b/g/n/ac/ax, a next-generation standard 802.11be uses EHT as a technical goal. One of existing key technologies is multi-link (multi-link) communication. A core idea of multi-link communication is that a WLAN device, namely, an EHT device, that supports a next-generation IEEE 802.11 standard has capabilities of sending and receiving on a plurality of bands, so that a larger bandwidth can be used for transmission. This further improves a throughput. A multi-band mainly includes but is not limited to a 2.4 GHz Wi-Fi band, a 5 GHz Wi-Fi band, and a 6 GHz Wi-Fi band. Access and transmission performed on each band are referred to as one link. Therefore, access and transmission performed on a plurality of bands are referred to as a multi-link. 802.11be has provided a definition of a multi-link device MLD, namely, a device that supports multi-link communication.

FIG. 2 is a schematic diagram of a multi-link communication scenario. FIG. 2 includes one AP MLD and one STA MLD. One AP MLD may include a plurality of access points (access points, APs), for example, an AP 1 and an AP 2, and one STA MLD may include a plurality of stations (stations, STAs), for example, a STA 1 and a STA 1. For example, a link 1 and a link 2 in FIG. 2 form two links, and communication between the AP MLD device and the STA MLD device on the link 1 and the link 2 may be referred to as multi-link communication.

2. TWT: A TWT is an energy-saving technology defined by Wi-Fi 6. A core idea is to set some periodic time periods, so that some devices need to stay active only in these time periods, and may sleep in other time periods, thereby implementing energy saving. The TWT is classified into an individual TWT (individual TWT) and a broadcast TWT (broadcast TWT). In the individual TWT, each STA may set up a TWT agreement with an AP independently. Therefore, each STA may have its own active time period and sleep time period. In the broadcast TWT, an AP may set up a common TWT agreement for a group of STAs, and the plurality of STAs operate in a same active time period, and sleep in other time periods.

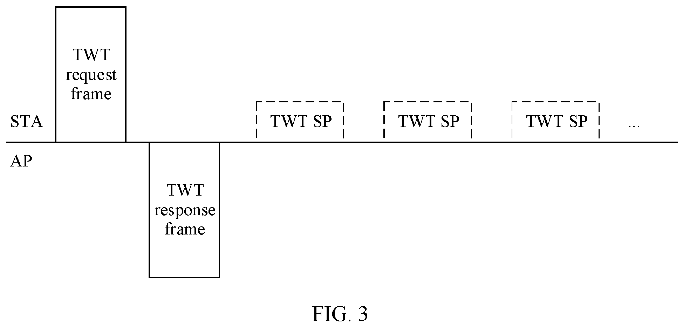

3. Individual (individual) TWT: The individual TWT means that a TWT requesting station (a requesting station for short hereinafter) sends a TWT request message to a TWT responding station (a responding station for short hereinafter) to request to set a wake time. After receiving the TWT request message, the responding station sends a TWT response message to the requesting station. After interaction is successful, a TWT agreement (TWT agreement) is set up between the requesting station and the responding station. After the TWT agreement is reached, both the requesting station and the responding station should stay active in an agreed-upon time period, to send and receive data. Outside the active time period, the stations may perform hibernation to implement energy saving. For example, as shown in FIG. 3, a STA may send a TWT request frame to an AP, where the TWT request frame is used to request to set up a TWT agreement. That is, the STA is a requesting station and the AP is a responding station, and vice versa. Correspondingly, the AP sends a TWT response frame to the STA, where the TWT response frame indicates that the AP accepts setup of a TWT agreement. After the TWT agreement is set up, an agreed-upon active time period is referred to as a TWT SP. Each TWT agreement may include a plurality of equal-length TWT service periods that occur periodically.

4. Broadcast TWT: Different from the individual TWT, the broadcast TWT provides a "batch management" mechanism. An AP may set up a series of TWT service periods that occur periodically with a plurality of STAs. In the service periods, the plurality of STAs need to stay active, to communicate with the AP. The AP may carry information about one or more broadcast TWTs in a beacon (Beacon) frame, and each broadcast TWT is represented by a broadcast TWT identifier and a MAC address of the AP. After receiving the beacon frame, if a STA intends to join the broadcast TWT, the STA may send a broadcast TWT setup request message to the AP, to join the broadcast TWT. During setup of the broadcast TWT, the STA needs to specify a broadcast TWT identifier to request to join a specific broadcast TWT. After joining the broadcast TWT, the STA may wake based on a service period indicated by a TWT parameter set, to communicate with the AP. It should be noted that, if the STA supports the broadcast TWT but does not explicitly join a broadcast TWT ID, the STA joins a broadcast TWT whose broadcast TWT ID=0 by default. Similar to the individual TWT, the parameter set of the broadcast TWT also specifies a wake interval of a TWT service period and duration of each TWT service period. In addition, the parameter of the broadcast TWT further includes a life cycle of the broadcast TWT, and the life cycle of the broadcast TWT is in a unit of a beacon interval and indicates duration of the set-up broadcast TWT.

In the 802.11be Draft 2.0, a function of the individual TWT has been extended to adapt to a multi-link communication scenario. An MLD may set up individual TWT agreements on a plurality of links with another MLD in the following manners: Manner 1: According to the 802.11ax protocol, the MLD may set up an individual TWT agreement and corresponding individual TWT SPs on each link. Manner 2: According to the 802.11be Draft 2.0, the MLD may send a TWT request message on one link to set up the TWT agreements on the plurality of links and individual TWT SPs corresponding to each of the plurality of links.

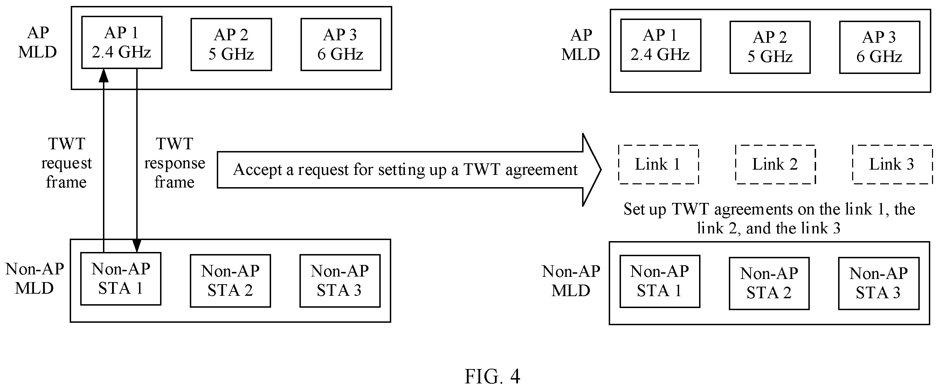

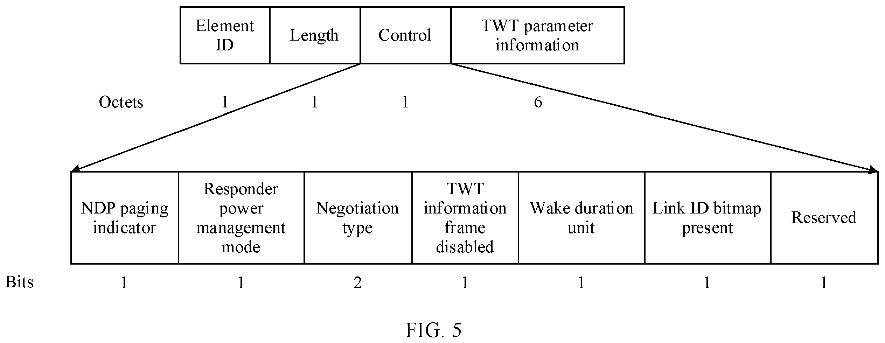

FIG. 4 is a schematic diagram of setting up a TWT agreement between two MLDs through negotiation by using the foregoing method 2. There are two MLDs in FIG. 4: one AP MLD and one non-AP MLD. A TWT agreement(s) needs to be set up between the two MLDs through negotiation. As shown in FIG. 3, the AP MLD has three affiliated AP stations: AP 1, AP 2, and AP 3, which respectively operate at 2.4 GHz, 5 GHz, and 6 GHz. The non-AP MLD has three affiliated non-AP stations: STA 1, STA 2, and STA 3. The following three links have been set up between the AP MLD and the non-AP MLD: a link 1 between the AP 1 and the STA 1, a link 2 between the AP 2 and the STA 2, and a link 3 between the AP 3 and the STA 3. TWT agreements are set up between the stations of the two MLD by sending a TWT element (element). The following first describes the TWT element and parameter information of the TWT element with reference to FIG. 5 to FIG. 7.

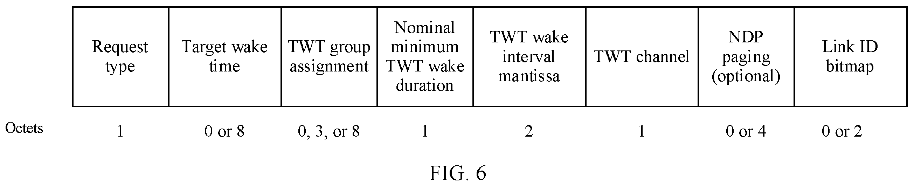

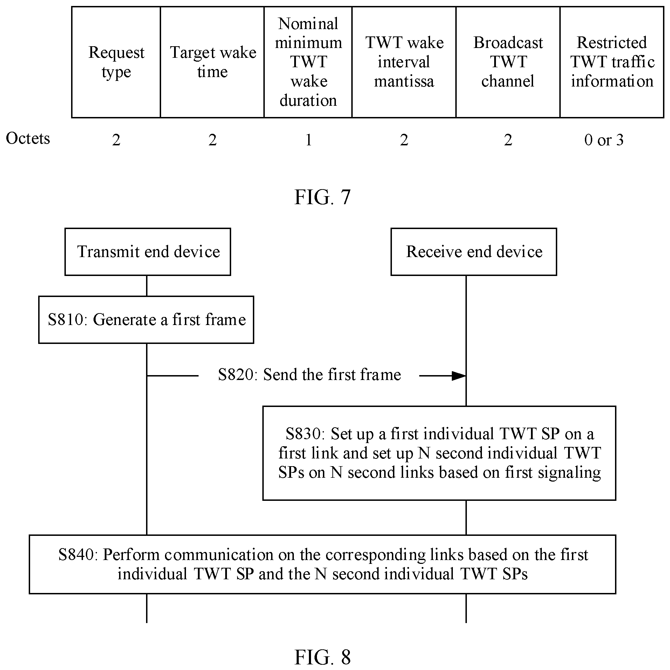

FIG. 5 is a schematic diagram of a structure of the TWT element. As shown in FIG. 5, the TWT element includes an element ID field, a length field, a control field, and a TWT parameter information field. The control field includes fields such as a null data packet (null data packet, NDP) paging (paging) indicator field, a responder power management mode subfield, a negotiation type subfield, and a TWT information frame disabled field. The negotiation type subfield indicates one of two individual TWT types and other two broadcast TWT types. For example, when the negotiation type subfield indicates the individual TWT type, as shown in FIG. 6, the TWT parameter information field in FIG. 5 includes a request type field, a target wake time field, a TWT group assignment field, a nominal minimum TWT wake duration field, a TWT wake duration mantissa field, a TWT channel field, an NDP paging field, and a link ID bitmap subfield. For example, when the negotiation type subfield indicates the broadcast TWT type, as shown in FIG. 7, the TWT parameter information field in FIG. 5 includes a request type field, a target wake time field, a nominal minimum TWT wake duration field, a TWT wake duration mantissa field, a broadcast TWT channel subfield, and a restricted TWT traffic information field. For a number of bits or octets occupied by each field, refer to descriptions in the corresponding accompanying drawings, which are not described one by one herein again.

It should be understood that, for ease of differentiation, the target wake time in FIG. 7 may be referred to as a start time of an individual TWT SP in embodiments of this application. Further, it is understood that the start time is a start time of the individual TWT SP in a first SP wake interval.

When the AP MLD in FIG. 4 intends to set up TWT agreements with the non-AP MLD on a plurality of links (for example, the link 1, the link 2, and the link 3) by using one link (for example, the link 1), the following two methods may be used:

Method 1: As shown in FIG. 4, the AP MLD may send a TWT request frame (TWT request frame) on the link 1, to request to set up the TWT agreements between the two MLDs on the plurality of links, and the request frame carries a TWT element. In addition, a value of a link ID bitmap present field of a control field in the TWT element is set to 1. In this case, an individual TWT parameter information field of the TWT element carries a link ID bitmap subfield. A number of bits of the link ID bitmap subfield is the same as a quantity of links between the two MLDs. Each bit in the bitmap subfield corresponds to a link between the two MLDs. If a bit in the link ID bitmap subfield is set to 1, it means that a TWT agreement is requested to be set up on a link corresponding to the bit whose bit value is 1. If a plurality of bits are set to 1, the two MLDs may simultaneously set up the TWT agreements on the plurality of links corresponding to the plurality of bits whose bit values are 1. In this case, the TWT parameter information in the TWT element is applied to the links corresponding to the bits whose values are 1 in the link ID bitmap subfield of the element.

Method 2: As shown in FIG. 4, the AP MLD still sends a TWT request frame on the link 1, but the request frame carries a plurality of TWT elements. In addition, values of link ID bitmap present fields of control fields of one or more TWT elements may be set to 1. In this case, individual TWT parameter information fields of these TWT elements carry link ID bitmap subfields. Similarly, the TWT parameter information in the TWT element is applied to a link corresponding to a bit whose value is 1 in the link ID bitmap subfield of the element, and all the TWT elements information is independent of each other.

For some MLD devices such as a device in an enhanced multi-link single radio (enhanced multi-link single radio, EMLSR)/enhanced multi-link multi-radio (enhanced multi-link multi-radio, EMLMR)/non-simultaneous transmit and receive (non-simultaneously transmit and receive, NSTR) mode, aligned individual TWT SPs on a plurality of links are important for device energy saving because these devices can operate on only one link at a time. When the MLD devices perform link switchover, a TWT period set up on a previous link is not expected to be interrupted. Therefore, it is a reasonable solution to set up aligned TWT SPs on a plurality of links. However, it can be learned from the foregoing two methods that, an existing method for setting up TWT agreements does not clearly describe how to set up aligned individual TWT SPs on a plurality of links by using one link. One TWT parameter information field is applied to a plurality of links, and a time synchronization function (time synchronization function, TSF) timer (timer) of each link is different. Therefore, a same parameter in the TWT parameter information field (for example, a value of a target wake time field in the TWT parameter information field) actually has an offset (offset) on different links, in other words, start points of a plurality of individual TWT SPs are not aligned. As a result, individual TWT SPs on different links are in an unaligned state.

Currently, based on the foregoing method 1, the proposal 802.11-22/0552r4 proposes a method of setting up aligned individual TWT SPs on a plurality of links by using one TWT element. Specifically, a method for calculating a target wake time on each link is as follows:

$$\mathrm{TWT_i = TWT_{ti} + TWT_{offset}}$$

$\mathrm{TWT_i}$ is a target wake time corresponding to an $i^{\mathrm{th}}$ link indicated in a link ID bitmap subfield, $\mathrm{TWT_{ti}}$ is a moment at which a target wake time indicated in the carried TWT element is mapped to a time axis of the $i^{\mathrm{th}}$ link, and a value of $\mathrm{TWT_{offset}}$ satisfies the following formula: $\mathrm{TWT_{offset} = TSF_0 - TSF_i}$, where $\mathrm{TSF_0}$ is a TSF time of a link with a smallest link ID in links associated with the two MLDs, and $\mathrm{TWT_i}$ is a TSF time of the $i^{\mathrm{th}}$ link.

In the foregoing method, a corresponding $\mathrm{TWT_{offset}}$ is calculated for each link by using $\mathrm{TSF_0}$ as a reference. It is equivalent to that the target wake time corresponding to each link is also aligned by using a target wake time of the link with the smallest link ID. Therefore, the aligned individual TWT SPs can be set up on the plurality of links by using one TWT element. However, in this method, when a receive MLD calculates the target wake time of each link, TSF calibration needs to be performed twice, and complexity is high. In addition, a negotiation process of the two MLDs does not specify whether the aligned individual TWT SPs are requested to be set up.

In view of this, this application provides a communication method, to effectively resolve the foregoing technical problem. The following describes in detail the method provided in this application.

FIG. 8 is a schematic block diagram of a communication method according to an embodiment of this application. It should be understood that a transmit device and a receive device in this embodiment are MLDs. For example, the transmit device in FIG. 8 may be an AP MLD and the receive device may be a STA MLD, and vice versa.

S810: The transmit device generates a first frame. The first frame includes a first element, the first element is used to request to set up an individual TWT SP, and the first element includes first information and second information. The first information indicates a first link on which an individual TWT SP is requested to be set up, the second information indicates N second links on which individual TWT SPs are requested to be set up, and the N second individual TWT SPs set up on the N second links need to be aligned with the first individual TWT SP on the first link. The N second individual TWT SPs one-to-one correspond to the N second links, the first link and the second link are communication links between the transmit device and the receive device, the N second links are different links, and N is a positive integer.

It should be understood that the individual TWT SP in this application may be referred to as an individual TWT agreement, and each individual TWT SP includes a plurality of equal-length TWT SPs that appear periodically as shown in FIG. 3.

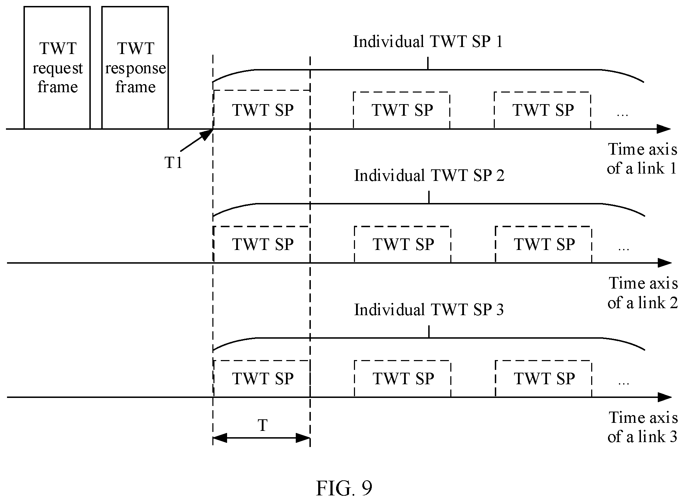

It should be further understood that, that two individual TWT SPs are aligned indicates that times (namely, times at which data can be sent and received) at which the devices wake in the two individual TWP SPs are aligned. For example, communication links between the transmit device and the receive device include a link 1, a link 2, a link 3, and a link 4. If the first information indicates the link 1, and the second information indicates the link 2 and the link 3, an individual TWT SP 1 on the link 1, an individual TWT SP 2 on the link 2, and an individual TWT SP 3 on the link 3 are aligned, as shown in FIG. 9. A location point T1 is a wake start time point of each individual TWT SP in a first wake interval, and T is wake duration of each individual TWT SP in a wake interval. However, it should be noted that because TSF timers of the three links are different, moments corresponding to the location T1 in time axes of the link 1, the link 2, and the link 3 are different. For example, the location T on the link 1 corresponds to a moment 1 in a time axis of the link 1, the location T on the link 2 corresponds to a moment 2 in a time axis of the link 1, and the location T on the link 3 corresponds to a moment 3 in a time axis of the link 3.

Optionally, the first link may be any one of a plurality of communication links between the transmit device and the receive device. For example, the first link is a communication link on which the first frame is sent.

It can be learned that, in the method, the second information indicates links on which aligned individual TWT SPs need to be set up, and the first information explicitly indicates that a plurality of individual TWT SPs are aligned on a plurality of links by using the first link as a reference link. Therefore, a method in which the transmit device sets up, with the receive device by using one link, aligned individual TWT SPs on a plurality of links is specified. Therefore, in this application, the first link indicated by the first information may also be referred to as the reference link. The two descriptions may be mutually replaced below.

S820: The transmit device sends the first frame. Correspondingly, the receive device receives the first frame.

It should be understood that the transmit device sends the first frame on any link associated with the transmit device and the receive device. Correspondingly, the receive device receives the first frame on the link.

S830: The receive device sets up the first individual TWT SP on the first link and sets up the N second individual TWT SPs on the N second links based on the first element.

Optionally, the first element further includes third information, and the third information indicates information about the first individual TWT SP. The information about the first individual TWT SP includes a start time of the first individual TWT SP, a wake interval of the first individual TWT SP, and duration of the first individual TWT SP in a wake interval.

It may be understood that, in this embodiment of this application, when the first element is a TWT element, the start time of the first individual TWT SP is related to a value of a TWT field of an individual TWT parameter information field, the wake interval of the first individual TWT SP is a value of a TWT wake interval mantissa field of the individual TWT parameter information field, and the duration of the first individual TWT SP is a value of a nominal minimum TWT wake duration field of the individual TWT parameter information field.

It should be understood that, for the plurality of individual TWT SPs aligned on the plurality of links, wake intervals and duration of the plurality of individual TWT SPs may be obtained based on the third information, and these parameters are constant, and do not differ based on TSF timers of the links. Only start times of the plurality of individual TWT SPs are offset due to the TSF timers. Therefore, a key to determining a plurality of aligned TWT SPs is to determine start times of the plurality of TWT SPs.

Specifically, in this step, the receive device may set up the first individual TWT SP on the first link based on the information about the first individual TWT SP in the third information. In addition, the receive device determines a start time of the second individual TWT SP based on the start time of the first individual TWT SP included in the information about the first individual TWT SP. The start time $TWT_j$ of the second individual TWT SP satisfies the following formula:

$$TWT_j = TWT_i + TWT_{offset} \quad (1),$$

where

$TWT_i$ is the start time of the first individual TWT SP, and a value of $TWT_{offset}$ satisfies the following formula: $TWT_{offset} = TSF_j - TSF_i$, where $TSF_i$ is a TSF time corresponding to the first link, and $TSF_j$ is a TSF time corresponding to the second link. In other words, the transmit device determines a corresponding moment of $TWT_i$ on a time axis of the second link according to the foregoing formula by using a time axis of the reference link as a reference standard. Then, the receive device determines a wake interval and duration of the second individual TWT SP based on the wake interval of the first individual TWT SP and the duration of the first individual TWT SP, and sets up the second individual TWT SP on the second link based on the information.

Specifically, when the first element is the TWT element, a value of $TWT_i$ may be obtained by mapping a value of a target wake time subfield in a TWT parameter information field of the first element to the TSF timer of the first link. The target wake time subfield has 16 bits in total, and the 16 bits correspond to values of bits 10 to 25 of the TSF timer. The value of $TWT_i$ can be obtained by replacing the bits 10 to 25 of the TSF timer of the first link with the value of the target wake time subfield of the first element. It may be understood that the value of the target wake time subfield in the TWT parameter information field of the first element is an absolute value. Therefore, a value obtained by mapping the value of the target wake time subfield to the TSF timer of the first link is consistent with a value obtained by mapping the value of the target wake time subfield to a TSF timer of another second link.

It may be understood that $TWT_i$ and $TWT_j$ may be considered as moments that are of a same time location and that respectively correspond to the time axis of the first link and the time axis of the second link.

It can be learned that the third information directly indicates the start time of the TWT SP on the reference link, and the start time of the second individual TWT SP may be calibrated based on a synchronization time difference between the reference link and the second link. Compared with a solution of setting up an aligned TWT SP proposed in the proposal 802.11-22/0552r4, for a link, the receive end performs calibration only once, thereby reducing complexity of calculating a start time of an aligned individual TWT SP on a link.

For example, when the first element is the TWT element, a field corresponding to the third information is a TWT parameter information field of the TWT element. Because meanings of the first information and the second information are different from a meaning of information indicated by current fields in the TWT element, the following provides possible field design manners of the first information and the second information in the TWT element.

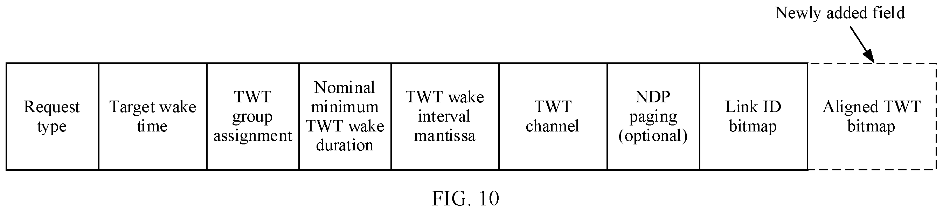

Manner 1: As shown in FIG. 10, a new field is added after a link ID bitmap subfield of an individual TWT parameter information field of the TWT element as a field corresponding to the second information. A name of the field is not limited in this application. For ease of description, the newly added field is referred to as an aligned TWT bitmap (Aligned TWT Bitmap) field in this application. For example, a length of the newly added aligned TWT bitmap field is 2 octets.

In Manner 1, the link ID bitmap subfield may be considered as a field corresponding to the first information, and indicate the first link (namely, the reference link). In other words, information about a TWT SP on a link indicated by the newly added aligned TWT bitmap subfield is calculated based on the information about the TWT SP on the reference link. The aligned TWT bitmap subfield indicates links between the transmit device and the receive device on which TWT SPs aligned with the first link are set up. For example, a link indication method is setting a bit corresponding to the link in the aligned TWT bitmap subfield to 1.

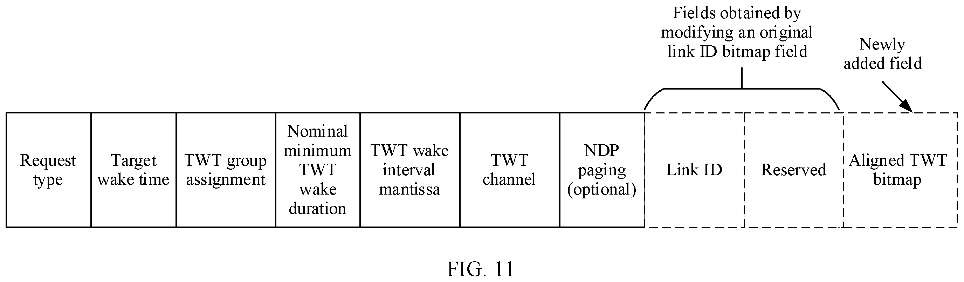

Manner 2: As shown in FIG. 11, a new field (namely, an aligned TWT bitmap subfield) is added after a link ID bitmap subfield of an individual TWT parameter information field of the TWT element as a field corresponding to the second information, and the existing link ID bitmap field is modified to a link ID field as a field corresponding to the first information. For example, a length of the newly added aligned TWT bitmap field is 2 octets.

Specifically, in this manner, the 2 octets of the original link bitmap subfield are modified to 1-octet. The first four bits of the 1 octet may indicate the first link (an ID of the first link ranges from 0 to 15), and the last four bits of the 1 octet are used as a reserved field. It can be learned through comparing Manner 2 with Manner 1, one octet is saved, but field design logic is the same.

Optionally, the first element further includes fourth information, and the fourth information indicates that the first element includes the second information. For example, the fourth information is 1-bit information. When a value of 1 bit is 1, it indicates that the first information includes the second information; or when a value of 1 bit is 0, it indicates that the first information does not include the second information.

For example, the first element is the TWT element. The following provides possible element design manners of the fourth information in the TWT element.

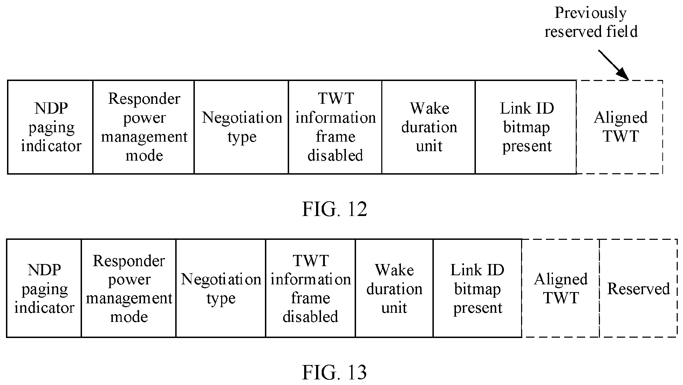

Manner 1: As shown in FIG. 12, one reserved bit in a control field of the TWT element is used as a field corresponding to the fourth information. A name of the field is not limited in this application. For ease of description, the field is referred to as an aligned TWT field in this application.

For example, when a value of the aligned TWT field is 1, it indicates that a TWT parameter information field carried in the TWT element is a parameter that needs to be used to determine a plurality of aligned TWT SPs; or when a value of the aligned TWT field is 0, it indicates that a TWT parameter information field carried in the TWT element is not a parameter that needs to be used to determine a plurality of aligned TWT SPs, or whether a TWT parameter information field carried in the TWT element is a parameter that needs to be used to align TWT SPs is not specified (not specified). Vice versa, and a specific setting manner is not limited in this embodiment.

Manner 2: As shown in FIG. 13, a 2-bit field indication is added to a control field of the TWT element as a field corresponding to the fourth information. A name of the field is not limited in this application. For ease of description, the field is referred to as an aligned TWT field in this application. In this case, because only one 1 bit is not used in the existing control field, and a number of bits is insufficient, one octet (8 bits) needs to be added, and 7 unused bits are used as a reserved field.

For example, when a value of the aligned TWT field is 00, it indicates that a TWT parameter information field carried in the TWT element is a parameter that needs to be used to determine a plurality of aligned TWT SPs; or when a value of the aligned TWT field is 01, it indicates that a TWT parameter information field carried in the TWT element is not a parameter that needs to be used to determine a plurality of aligned TWT SPs; or when a value of the aligned TWT field is 10, it indicates that whether a TWT parameter information field carried in the TWT element is a parameter that needs to be used to align TWT SPs is not specified. A specific setting manner is not limited in this embodiment.

For example, in this application, when the value of the aligned TWT field indicates that the TWT parameter information field carried in the TWT element is the parameter that needs to be used to determine the plurality of aligned TWT SPs, an aligned TWT bitmap field exists. Otherwise, the aligned TWT bitmap field does not exist. Therefore, the aligned TWT field in this application may also be referred to as an aligned TWT bitmap present (Aligned TWT bitmap present) field.

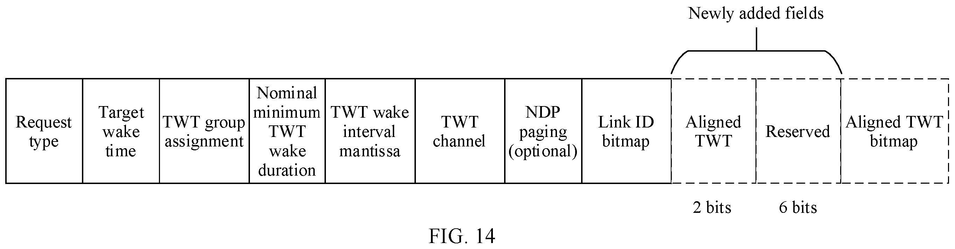

Manner 3: As shown in FIG. 14, based on FIG. 10, a 1-octet field is added after the link ID bitmap subfield of the individual TWT parameter information field of the TWT element, and a 2-bit subfield indication in the newly added field is used as a field corresponding to the fourth information. A name of the field is not limited in this application. For ease of description, the field is referred to as an aligned TWT field in this application. In this case, if a link ID bitmap subfield is present, one octet (8 bits) is added after the link ID bitmap subfield, and 6 unused bits are used as a reserved field.

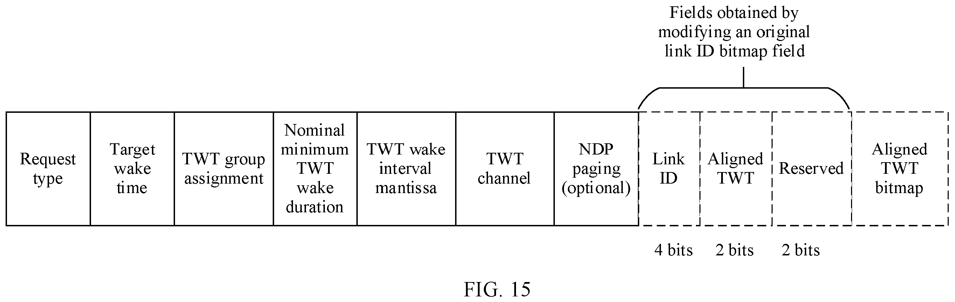

Manner 4: As shown in FIG. 15, based on FIG. 11, 2 bits in 4 reserved bits in the link ID subfield in FIG. 11 are used as a field corresponding to the fourth information. A name of the field is not limited in this application. For ease of description, the field is referred to as an aligned TWT field in this application.

For example, in Manner 3 and Method 4, when a value of the aligned TWT field is 00, it indicates that a TWT parameter information field carried in the TWT element is a parameter that needs to be used to determine a plurality of aligned TWT SPs; or when a value of the aligned TWT field is 01, it indicates that a TWT parameter information field carried in the TWT element is not a parameter that needs to be used to determine a plurality of aligned TWT SPs; or when a value of the aligned TWT field is 10, it indicates that whether a TWT parameter information field carried in the TWT element is a parameter that needs to be used to align TWT SPs is not specified. A specific setting manner is not limited in this embodiment.

For example, in this application, when the value of the aligned TWT field indicates that the TWT parameter information field carried in the TWT element is the parameter that needs to be used to determine the plurality of aligned TWT SPs, an aligned TWT bitmap field exists. Otherwise, the aligned TWT bitmap field does not exist. Therefore, the aligned TWT field in this application may also be referred to as an aligned TWT bitmap present (Aligned TWT bitmap present) field.

Optionally, the aligned TWT field may not be added to the control field of the TWT element (in other words, the fourth information is not included), and the aligned TWT bitmap subfield (namely, the second information) always exists. To be specific, when requesting to set up the individual TWT SP, the transmit device does not explicitly indicate whether to set up the aligned SPs on the plurality of links, and the receive end determines, by using an indication of the aligned TWT bitmap subfield, whether to set up the aligned TWT SPs. Other behaviors of the receive device and the transmit device remain unchanged. For example, if values of some bits in the aligned TWT bitmap subfield are 0, TWT SPs aligned with the reference link do not need to be set up on these links whose bit values are 0; or if values of some bits in the TWT bitmap subfield are 1, TWT SPs aligned with the reference link are set up on these links whose bit values are 1.

S840: The transmit device and the receive device communicate with each other on the corresponding links based on the first individual TWT SP and the N second individual TWT SPs.

Optionally, before the receive device determines to accept a request of the transmit device for the first element, the method further includes:

S850: The receive device sends a second frame, where the second frame includes a second element, the second element includes fifth information, and the fifth information indicates that the receive device confirms accepting setup of the individual TWT SPs on the first link and the N second links. Correspondingly, the transmit device receives the second frame.

It should be understood that the foregoing content describes a process in which the receive device sets up the plurality of individual TWT SPs on the plurality of links based on the first element after accepting the request of the transmit device for setting up the TWT SPs. Actually, the receive device may alternatively reject the request. Based on specific signaling, the following provides a possible complete implementation procedure in which each of an MLD 1 (transmit device) and an MLD 2 (receive device) sets up, by using the foregoing solution, aligned individual TWT SPs on a plurality of links.

The MLD 1 sends a TWT setup frame (namely, an example of the first frame) to the MLD 2 on a link associated with the MLD 1 and the MLD 2. The MLD 1 carries a TWT element (namely, an example of the first element) in the TWT setup frame, and carries a value indicating a Suggest TWT or a Demand TWT in a TWT Setup Command field in a request type field of the TWT element. The Suggest TWT or the Demand TWT indicates that the TWT setup frame is a request for initiating TWT SP setup. The Suggest TWT or the Demand TWT allows the MLD 1 to initiate the TWT SP setup request and carry a series of TWT parameter information (namely, an example of the third information). The MLD 1 should further set an aligned TWT field (an example of the fourth information) of a TWT control field to 1 (or 00) to indicate that the TWT element also carries an aligned TWT bitmap field (an example of the second information). In addition, the aligned TWT bitmap field indicates links on which individual TWT SPs aligned with the reference link are expected to be set up, where the reference link is indicated by a link ID bitmap subfield or a link ID field (namely, an example of the first information).

Correspondingly, after receiving the TWT setup frame sent by the MLD 1, the MLD 2 may determine, based on the TWT element in the TWT setup frame, that the TWT setup frame is an individual TWT SP setup request, determine, by using the link ID bitmap (or link ID) field and the aligned TWT bitmap field in the TWT element, the links on which the MLD 1 intends to set up the aligned TWT SPs, and determine a link that is the reference link. Based on the TWT field of the individual TWT parameter information field, start times of individual TWT SPs that need to be aligned on several requested links may be calculated according to the formula (1). Finally, based on other information of the individual TWT parameter information field, such as the nominal minimum TWT wake duration field and the TWT wake interval mantissa field, information such as duration and a wake interval of the aligned individual TWT SP requested to be set up may be calculated. In this way, after obtaining all required information, the MLD 2 determines, based on the obtained information, whether to accept the TWT SP setup request initiated by the MLD 1. The following specifically describes whether the MLD 2 receives the request of the MLD 1.

In a possible scenario, the MLD 2 accepts the request. In this case, the MLD 2 sends a TWT Setup frame (namely, an example of the second frame) including a TWT element to the MLD 1. When a value of a TWT Request subfield of a request type field of the TWT element is equal to 0, it indicates that the TWT Setup frame is a response frame. The TWT element carries, in a TWT Setup Command field in the request type field, a value indicating an Accept TWT (namely, an example of the fifth information). The Accept TWT indicates to confirm accepting the request of the MLD 1. Optionally, a control field of the TWT element may carry an aligned TWT subfield, and the field is set to 1 (or 00). A meaning of the subfield is the same as that described above, and details are not described herein again. Optionally, the TWT element may carry an individual TWT parameter information field that is the same as that in the received TWT element, or may not carry an individual TWT parameter information field.

In another possible scenario, the MLD 2 does not accept the request. In this case, the MLD 2 sends a TWT Setup frame (namely, an example of the second frame) including a TWT element to the MLD 1. When a value of a TWT Request subfield of a request type field of the TWT element is equal to 0, it indicates that the TWT Setup frame is a response frame. The TWT element carries, in a TWT Setup Command field in the request type field, a value indicating a Reject TWT. The Reject TWT indicates that the request of the MLD 1 is not accepted. Optionally, a control field of the TWT element may carry an aligned TWT subfield, and the field may be set to any value. Optionally, the TWT element may carry an individual TWT parameter information field that is the same as that in the received TWT element, or may not carry an individual TWT parameter information field.

In still another possible scenario, the MLD 2 does not accept the request, but may provide a suggested parameter to the MLD 1. In this case, the MLD 2 sends a TWT Setup frame (namely, an example of the second frame) including a TWT element to the MLD 1. When a value of a TWT Request subfield of a request type field of the TWT element is equal to 0, it indicates that the TWT Setup frame is a response frame. The TWT element carries, in a TWT Setup Command field in the request type field, a value indicating an Alternate TWT or a Dictate TWT. The Alternate TWT or the Dictate TWT indicates that the request of the MLD 1 is not accepted, but the suggested TWT SP parameter may be provided to the MLD 1. The suggested parameter is carried in an individual TWT parameter information field in the TWT element, and an aligned TWT subfield in a control field in the TWT element indicates whether the suggested TWT SP parameter is an aligned TWT SP. For example, if the aligned TWT subfield of the control field of the TWT element is set to 1, it indicates that the suggested TWT SP is the aligned TWT SP. If the aligned TWT subfield is set to 0, it indicates that the suggested TWT SP may be an aligned or unaligned TWT SP.

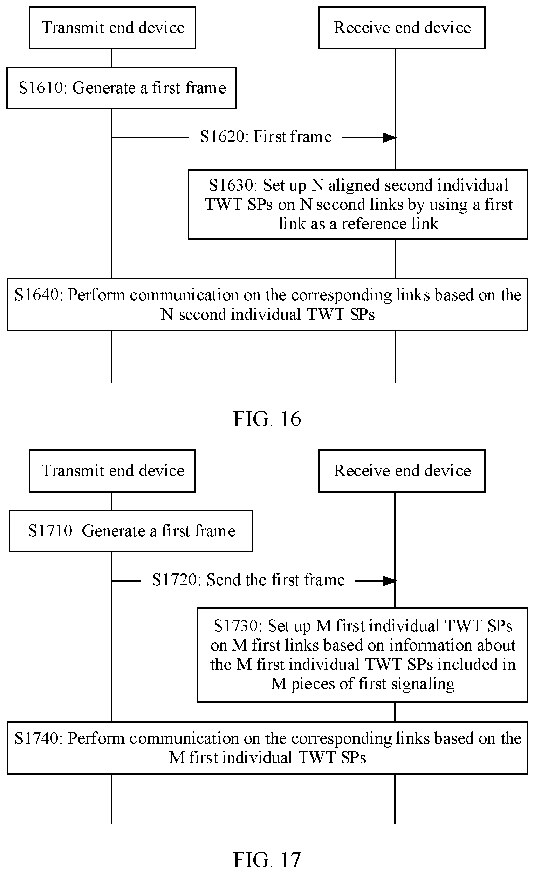

FIG. 16 is a schematic block diagram of another communication method according to an embodiment of this application. It should be understood that a transmit device and a receive device in this embodiment are MLDs. For example, the transmit device in FIG. 16 may be an AP MLD and the receive device may be a STA MLD, and vice versa.

S1610: The transmit device generates a first frame. The first frame includes a first element, the first element is used to request to set up an individual TWT SP, and the first element includes second information. The second information indicates N second links on which individual TWT SPs are requested to be set up, the N second individual TWT SPs set up on the N second links need to be aligned, and the N second individual TWT SPs one-to-one correspond to the N second links. The N second links are different links, N is a positive integer, and the second link is a communication link between the transmit device and the receive device.

S1620: The transmit device sends the first frame on a first link. The N second individual TWT SPs are aligned by using the first link as a reference link. Correspondingly, the receive device receives the first frame on the first link.

It should be understood that the first link is a communication link between the transmit device and the receive device.

It can be learned that, compared with the method shown in FIG. 8, the first element in the method may not indicate first information. If the first element does not indicate the first information, the first link indicated by the first information in FIG. 8 may be a link on which the first element is sent. In this way, the second information indicates links on which aligned individual TWT SPs need to be set up, and a plurality of individual TWT SPs are aligned on a plurality of links by using the first link as the reference link. Therefore, a method in which the transmit device sets up, with the receive device by using one link, aligned individual TWT SPs on a plurality of links is specified.

The method may further be understood as follows: When the first element includes the second information, the first information definitely does not exist. In this way, the second information indicates links on which aligned individual TWT SPs need to be set up, and a plurality of individual TWT SPs are aligned on a plurality of links by using the first link on which the first frame is sent as the reference link. Therefore, a method in which the transmit device sets up, with the receive device by using one link, aligned individual TWT SPs on a plurality of links is specified.

S1630: The receive device sets up the N aligned second individual TWT SPs on the N second links by using the first link as the reference link.

Optionally, the first element further includes third information, and the third information indicates information about a first individual TWT SP on the first link.

The information about the first individual TWT SP includes a start time of the first individual TWT SP, a wake interval of the first individual TWT SP, and duration of the first individual TWT SP in a wake interval.

It should be noted that, in the method, even if the information about the first individual TWT SP is configured, the first individual TWT SP may not be actually set up on the first link. The information about the first individual TWT SP on the first link is used as only reference information, to set up the aligned individual TWT SPs on the second links indicated by the second information. If the N second links indicated by the second information include the first link, the first individual TWT SP is actually set up on the first link. If the N second links indicated by the second information do not include the first link, no first individual TWT SP is set up on the first link. In this case, the first individual TWT SP may be considered as a virtual individual TWT SP, and is only a reference TWT SP for setting up the aligned individual TWT SPs.

It may be understood that, in this embodiment of this application, when the first element is a TWT element, the start time of the first individual TWT SP is related to a value of a TWT field of an individual TWT parameter information field, the wake interval of the first individual TWT SP is a value of a TWT wake interval mantissa field of the individual TWT parameter information field, and the duration of the first individual TWT SP is a value of a nominal minimum TWT wake duration field of the individual TWT parameter information field.

It should be understood that, for a plurality of individual TWT SPs aligned on a plurality of links, wake intervals and duration of the plurality of individual TWT SPs may be obtained based on the third information, and these parameters are constant, and do not differ based on TSF timers of the links. Only start times of the plurality of individual TWT SPs are offset due to the TSF timers. Therefore, a key to determining a plurality of aligned TWT SPs is to determine start times of the plurality of TWT SPs.

Specifically, in this step, the receive device may determine a start time of the second individual TWT SP based on the start time of the first individual TWT SP included in the information about the first individual TWT SP. The start time $TWT_j$ of the second individual TWT SP satisfies the following formula:

$$TWT_j = TWT_i + TWT_{offset} \quad (2),$$

where
$TWT_i$ is the start time of the first individual TWT SP, and a value of $TWT_{offset}$ satisfies the following formula: $TWT_{offset} = TSF_j - TSF_i$, where $TSF_i$ is a TSF time corresponding to the first link, and $TSF_j$ is a TSF time corresponding to the second link. In other words, the transmit device determines a corresponding moment of $TWT_i$ on a time axis of the second link according to the foregoing formula by using a time axis of the reference link as a reference standard. Then, the receive device determines a wake interval and duration of the second individual TWT SP based on the wake interval of the first individual TWT SP and the duration of the first individual TWT SP, and sets up the second individual TWT SP on the second link based on the information.

Specifically, when the first element is the TWT element, a value of $TWT_i$ may be obtained by mapping a value of a target wake time subfield in a TWT parameter information field of the first element to a TSF timer of the first link. The target wake time subfield has 16 bits in total, and the 16 bits correspond to values of bits 10 to 25 of the TSF timer. The value of $TWT_i$ can be obtained by replacing the bits 10 to 25 of the TSF timer of the first link with the value of the target wake time subfield of the first element. It may be understood that the value of the target wake time subfield in the TWT parameter information field of the first element is an absolute value. Therefore, a value obtained by mapping the value of the target wake time subfield to the TSF timer of the first link is consistent with a value obtained by mapping the value of the target wake time subfield to a TSF timer of another second link.

It may be understood that $TWT_i$ and $TWT_j$ may be considered as moments that are of a same time location and that respectively correspond to the time axis of the first link and the time axis of the second link.

It can be learned that the third information directly indicates the start time of the TWT SP on the reference link, and the start time of the second individual TWT SP may be calibrated based on a synchronization time difference between the reference link and the second link. Compared with a solution of setting up an aligned TWT SP proposed in the proposal 802.11-22/0552r4, for a link, the receive end performs calibration only once, thereby reducing complexity of calculating a start time of an aligned individual TWT SP on a link.

For example, when the first element is the TWT element, a field corresponding to the third information is a TWT parameter information field of the TWT element. For a possible field design manner of the second information in the TWT element, refer to the descriptions in the embodiment corresponding to FIG. 8. Details are not described herein again.

S1640: The transmit device and the receive device communicate with each other on the corresponding links based on the N second individual TWT SPs.

Optionally, before the receive device determines to accept a request of the transmit device for the first element, the method further includes:
S1650: The receive device sends a second frame, where the second frame includes a second element, the second element includes fifth information, and the fifth information indicates that the receive device confirms accepting setup of the individual TWT SPs on the N second links. Correspondingly, the transmit device receives the second frame.

It should be understood that the foregoing content describes a process in which the receive device sets up the plurality of individual TWT SPs on the plurality of links based on the first element after accepting the request of the transmit device for setting up the TWT SPs. Actually, the receive device may alternatively reject the request. Based on specific signaling, the following provides a possible complete implementation procedure in which each of an MLD 1 (transmit device) and an MLD 2 (receive device) sets up, by using the foregoing solution, aligned individual TWT SPs on a plurality of links.

The MLD 1 sends a TWT setup frame (namely, an example of the first frame) to the MLD 2 on a link associated with the MLD 1 and the MLD 2. The MLD 1 carries a TWT element (namely, an example of the first element) in the TWT setup frame, and carries a value indicating a Suggest TWT or a Demand TWT in a TWT Setup Command field in a request type field of the TWT element. The Suggest TWT or the Demand TWT indicates that the TWT setup frame is a request for initiating TWT SP setup. The Suggest TWT or the Demand TWT allows the MLD 1 to initiate the TWT SP setup request and carry a series of TWT parameter information (namely, an example of the third information). The MLD 1 should further set an aligned TWT field (an example of the fourth information) of a TWT control field to 1 (or 00) to indicate that the TWT element also carries an aligned TWT bitmap field (an example of the second information). In addition, the aligned TWT bitmap field indicates links on which individual TWT SPs aligned with a reference link are expected to be set up, where the reference link is a link on which the TWT setup frame is sent.

Correspondingly, after receiving the TWT setup frame sent by the MLD 1, the MLD 2 may determine, based on the TWT element in the TWT setup frame, that the TWT setup frame is an individual TWT SP setup request, determine, by using the aligned TWT bitmap field in the TWT element, the links on which the MLD 1 intends to set up the aligned TWT SPs, and determine that the link on which the TWT setup frame is received is the reference link. Based on the TWT field of the individual TWT parameter information field, start times of individual TWT SPs that need to be aligned on several requested links may be calculated according to the formula (2). Finally, based on other information of the individual TWT parameter information field, such as the nominal minimum TWT wake duration field and the TWT wake interval mantissa field, information such as duration and a wake interval of the aligned individual TWT SP requested to be set up may be calculated. In this way, after obtaining all required information, the MLD 2 determines, based on the obtained information, whether to accept the TWT SP setup request initiated by the MLD 1. The following specifically describes whether the MLD 2 receives the request of the MLD 1.

In a possible scenario, the MLD 2 accepts the request. In this case, the MLD 2 sends a TWT Setup frame (namely, an example of the second frame) including a TWT element to the MLD 1. When a value of a TWT Request subfield of a request type field of the TWT element is equal to 0, it indicates that the TWT Setup frame is a response frame. The TWT element carries, in a TWT Setup Command field in the request type field, a value indicating an Accept TWT (namely, an example of the fifth information). The Accept TWT indicates to confirm accepting the request of the MLD 1. Optionally, a control field of the TWT element may carry an aligned TWT subfield, and the field is set to 1 (or 00). A meaning of the subfield is the same as that described above, and details are not described herein again. Optionally, the TWT element may carry an individual TWT parameter information field that is the same as that in the received TWT element, or may not carry an individual TWT parameter information field.

In another possible scenario, the MLD 2 does not accept the request. In this case, the MLD 2 sends a TWT Setup frame (namely, an example of the second frame) including a TWT element to the MLD 1. When a value of a TWT Request subfield of a request type field of the TWT element is equal to 0, it indicates that the TWT Setup frame is a response frame. The TWT element carries, in a TWT Setup Command field in the request type field, a value indicating a Reject TWT. The Reject TWT indicates that the request of the MLD 1 is not accepted. Optionally, a control field of the TWT element may carry an aligned TWT subfield, and the field may be set to any value. Optionally, the TWT element may carry an individual TWT parameter information field that is the same as that in the received TWT element, or may not carry an individual TWT parameter information field.

In still another possible scenario, the MLD 2 does not accept the request, but may provide a suggested parameter to the MLD 1. In this case, the MLD 2 sends a TWT Setup frame (namely, an example of the second frame) including a TWT element to the MLD 1. When a value of a TWT Request subfield of a request type field of the TWT element is equal to 0, it indicates that the TWT Setup frame is a response frame. The TWT element carries, in a TWT Setup Command field in the request type field, a value indicating an Alternate TWT or a Dictate TWT. The Alternate TWT or the Dictate TWT indicates that the request of the MLD 1 is not accepted, but the suggested TWT SP parameter may be provided to the MLD 1. The suggested parameter is carried in an individual TWT parameter information field in the TWT element, and an aligned TWT subfield in a control field in the TWT element indicates whether the suggested TWT SP parameter is an aligned TWT SP. For example, if the aligned TWT subfield of the control field of the TWT element is set to 1, it indicates that the suggested TWT SP is the aligned TWT SP. If the aligned TWT subfield is set to 0, it indicates that the suggested TWT SP may be an aligned or unaligned TWT SP.

In the following, this application provides another communication method, to effectively resolve the foregoing technical problem. The method is described in detail below.

FIG. 17 is a schematic block diagram of still another communication method according to an embodiment of this application. It should be understood that a transmit device and a receive device in this embodiment are MLDs. For example, the transmit device in FIG. 17 may be an AP MLD and the receive device may be a STA MLD, and vice versa.

S1710: The transmit device generates a first frame. The first frame includes M first elements, the first element is used to request to set up an individual TWT SP, and the first element includes first information and second information. The first information indicates a target link on which an individual TWT SP is requested to be set up, the second information indicates information about the target individual TWT SP on the target link, and M target individual TWT SPs corresponding to the M first elements are aligned. The target link is a communication link between the transmit device and the receive device, and M is an integer greater than 1.

It should be understood that M target links corresponding to the M first elements are different links.

Optionally, the information about the target individual TWT SP includes a start time of the target individual TWT SP, a wake interval of the target individual TWT SP, and duration of the target individual TWT SP.

It should be further understood that a difference between this method and the method in FIG. 8 lies in that the second information already directly includes the information about the target individual TWT SP on the corresponding target link (namely, a link on which the individual TWT SP needs to be aligned).

It should be noted that, the transmit device further needs to ensure that wake intervals of the target individual TWT SPs on the M target links are consistent and that duration of the target individual TWT SPs in a wake interval are consistent, to ensure that all the individual TWT SPs set up on the M target links are aligned.

It can be learned from the foregoing descriptions that, for a plurality of individual TWT SPs aligned on a plurality of links, these parameters, namely, wake intervals and duration of the plurality of individual TWT SPs, are constant, and do not differ based on TSF timers of the links. Only start times of the plurality of individual TWT SPs are offset due to the TSF timers. Therefore, a key to determining a plurality of aligned TWT SPs by the transmit device is to determine start times of the TWT SPs on a plurality of links. Therefore, the transmit device may determine, based on a same link (namely, one reference link), start times of the target individual TWT SPs respectively corresponding to the M target links.

The start time $TWT_j$ of the target individual TWT SP satisfies the following formula:

$$TWT_j = TWT_i + TWT_{offset} \quad (3),$$

where

$TWT_i$ is a corresponding moment at which the start time of the target individual TWT SP is mapped to a time axis of the reference link. For example, a value of $TWT_{offset}$ satisfies the following formula: $TWT_{offset}=TSF_j - TSF_i$ , where $TSF_i$ is a TSF time corresponding to the reference link, and $TSF_j$ is a TSF time corresponding to the target link. In other words, the transmit device separately determines corresponding moments of $TWT_i$ on time axes of the M target links according to the foregoing formula by using the time axis of the reference link as a reference standard. Optionally, the reference link is any link in communication links between the transmit device and the receive device.

Optionally, the reference link is preset or preconfigured. For example, the reference link may be a link on which the first frame is sent, or may be specified as a target link corresponding to a 1st element in the M first elements, or a specified link, for example, a link with a smallest link ID.

S 1720: The transmit device sends the first frame. Correspondingly, the receive device receives the first frame.

It should be further understood that the transmit device sends the first frame on any link associated with the transmit device and the receive device. Correspondingly, the receive device receives the first frame on the link.

S1730: The receive device sets up the M target individual TWT SPs on the M target links based on information about the M target individual TWT SPs included in the M first elements.

In a possible implementation, if the first information indicates only one link, and the link is the target link, the receive device sets up the M target individual TWT SPs on the M target links based on the information about the M target individual TWT SPs included in the M first elements. Because the information that is about the M target individual TWT SPs and that is sent by the transmit device is information obtained by performing alignment and calibration, the M target individual TWT SPs set up by the receive device are aligned.

In another possible implementation, if the first information indicates a plurality of links, and the plurality of links include the target link, after receiving a plurality of first elements, the receive device cannot determine, based on the first information, which link in the plurality of links is the target link. The receive device first determines information about TWT SPs on the plurality of links based on information about TWT SPs indicated by second information. Because TSF timers of all the links are different, start times of the target individual TWT SPs indicated by the second information are actually offset in time axes of different links, in other words, the start times of the target individual TWT SPs not aligned. In this way, the information about the TWT SPs on the plurality of links indicated by M pieces of first information in the M first elements may be determined, and the information about the TWT SPs on the plurality of links indicated by the M pieces of first information may be compared, to learn which link in the plurality of links in all the pieces of first information is the target link.

Optionally, the first element further includes third information, and the third information indicates that the target link exists in one or more links indicated by the first information. For example, the third information is 1-bit information. When a value of 1 bit is 1, it indicates that the target link exists in the one or more links indicated by the first information; or when a value of 1 bit is 0, it indicates that the target link does not exist in the one or more links indicated by the first information. When the third information is 2-bit information, an indication manner is similar to that of the 1 bit, and details are not described herein again.

In a possible specific implementation, when the first element is a TWT element, a field corresponding to the first information is a link ID bitmap field in a TWT parameter information field of the TWT element or an aligned TWT bitmap subfield in a TWT parameter information field of the TWT element field, a field corresponding to the second information is a field that is in the TWT parameter information field of the TWT element and that is related to the information about the TWT SP, and a field corresponding to the third information may reuse a design of the aligned TWT field in the embodiment shown in FIG. 8. Details are not described herein again.

Optionally, in the foregoing implementation, an aligned TWT field may not be added to a control field of the TWT element (namely, the first element) (in other words, the third information is not included). To be specific, when requesting to set up the individual TWT SPs, the transmit device does not explicitly indicate whether the plurality of links indicated by the link ID bitmap subfield include the target link, and the receive end determines, according to the method described above, whether the plurality of links indicated by the link ID bitmap subfield include the target link. Other behaviors of the receive device and the transmit device remain unchanged.

S 1740: The transmit device and the receive device communicate with each other on the corresponding links based on the M target individual TWT SPs.

Optionally, before the receive device determines to accept a request of the transmit device for the first element, the method further includes:

S1750: The receive device sends a second frame, where the second frame includes a second element, the second element includes fourth information, and the fourth information indicates that the receive device confirms accepting setup of the individual TWT SPs on the M target links corresponding to the M first elements. Correspondingly, the transmit device receives the second frame.

It should be understood that the foregoing content describes a process in which the receive device sets up the plurality of individual TWT SPs on the plurality of links based on the M first elements after accepting the request of the transmit device for setting up the TWT SPs.

Actually, the receive device may alternatively reject the request. Based on specific signaling, the following provides a possible complete implementation procedure in which each of an MLD 1 (transmit device) and an MLD 2 (receive device) sets up, by using the foregoing solution, aligned individual TWT SPs on a plurality of links.

The MLD 1 sends a TWT setup frame (namely, an example of the first frame) to the MLD 2 on an associated link. The MLD 1 carries a plurality of TWT elements (namely, an example of the M first elements) in the TWT setup frame, and carries, in a TWT Setup Command field in a request type field of each TWT element, a value indicating a Suggest TWT or a Demand TWT. The Suggest TWT or the Demand TWT indicates that the TWT setup frame is a request for initiating TWT SP setup. The Suggest TWT or the Demand TWT allows the MLD to initiate the request and carry a series of TWT parameter information. Each TWT element carries a link ID bitmap subfield (namely, an example of the first information) to indicate one or more links that are requested to be set up. When an aligned TWT subfield (an example of the third information) is set to 1 (or 00), it indicates that one or more links indicated by the link ID bitmap subfield carried in the TWT element include the target link. The MLD 1 determines, by using the calculation method described in the formula (3), a value of a TWT subfield of an individual TWT parameter information field of a target link corresponding to each TWT element (namely, a location of a start inter-unit of a first individual TWT included in the second information) to ensure that TWT SPs on all the target links calculated by the receive end are aligned, and the receive end does not need to perform additional calibration.

Correspondingly, after receiving the TWT setup frame sent by the MLD 1, the MLD 2 may determine, based on the TWT elements in the TWT setup frame, that the TWT setup frame is an individual TWT SP setup request, and may determine, by using the link ID bitmap subfield in each TWT element, links on which the MLD 1 intends to set up TWT SPs. A start time of a TWT SP on the one or more links indicated by the link ID bitmap subfield may be obtained by using the TWT subfield of the individual TWT parameter information field in each TWT element. Based on start times of TWT SPs on all links indicated by link ID bitmap subfields in all the TWT elements, TWT SPs on which links are aligned may be determined (in other words, it is determined that which links are target links). Finally, based on other information of the individual TWT parameter information field, such as a nominal minimum TWT wake duration field and a TWT wake interval mantissa subfield, information such as duration and a wake interval of the TWT SP requested to be set up may be calculated. After obtaining all required information, the MLD 2 determines whether to accept application of the MLD 1. The following specifically describes whether the MLD 2 receives the request of the MLD 1.

In a possible scenario, the MLD 2 accepts the request. In this case, the MLD 2 sends a TWT Setup frame (namely, an example of the second frame) including a TWT element to the MLD 1. When a value of a TWT Request subfield of a request type field of the TWT element is equal to 0, it indicates that the TWT Setup frame is a response frame. The TWT element carries, in a TWT Setup Command field in the request type field, a value indicating an Accept TWT (namely, an example of the fourth information). The Accept TWT indicates to confirm accepting the request of the MLD 1. Optionally, a control field of the TWT element may carry an aligned TWT subfield, and the field is set to 1 (or 00). A meaning of the subfield is the same as that described above, and details are not described herein again. In addition, the TWT element may not carry an individual TWT parameter information field.

In another possible scenario, the MLD 2 does not accept the request. In this case, the MLD 2 sends a TWT Setup frame (namely, an example of the second frame) including a TWT element to the MLD 1. When a value of a TWT Request subfield of a request type field of the TWT element is equal to 0, it indicates that the TWT Setup frame is a response frame. The TWT element carries, in a TWT Setup Command field in the request type field, a value indicating a Reject TWT. The Reject TWT indicates that the request of the MLD 1 is not accepted. Optionally, a control field of the TWT element may carry an aligned TWT subfield, and the field may be set to any value. Optionally, the TWT element may carry an individual TWT parameter information field that is the same as that in the received TWT element, and may not carry an individual TWT parameter information field.

In still another possible scenario, the MLD 2 does not accept the request, but may provide a suggested parameter to the MLD 1. In this case, the MLD 2 sends a TWT Setup frame (namely, an example of the second frame) including a TWT element to the MLD 1. When a value of a TWT Request subfield of a request type field of the TWT element is equal to 0, it indicates that the TWT Setup frame is a response frame. The TWT element carries, in a TWT Setup Command field in the request type field, a value indicating an Alternate TWT or a Dictate TWT. The Alternate TWT or the Dictate TWT indicates that the request of the MLD 1 is not accepted, but the suggested TWT SP parameter may be provided to the MLD 1. The suggested parameter is carried in an individual TWT parameter information field in the TWT element, and an aligned TWT subfield in a control field in the TWT element indicates whether the suggested TWT SP parameter is an aligned TWT SP. For example, if the aligned TWT subfield of the control field of the TWT element is set to 1, it indicates that the suggested TWT SP is the aligned TWT SP. If the aligned TWT subfield is set to 0, it indicates that the suggested TWT SP may be an aligned or unaligned TWT SP.

It should be noted that although this specification focuses on setting up aligned individual TWT SPs on a plurality of links by using one link, this application is also applicable to setting up aligned broadcast TWT SPs on a plurality of links by using one link. A difference lies in that when an AP MLD broadcasts and sets up aligned broadcast TWT SPs on a plurality of links, the AP MLD first needs to carry one or more TWT elements in a beacon to broadcast corresponding TWT SP parameters. After receiving the beacon, a non-AP MLD selects whether to send a TWT setup frame to the AP MLD. If the non-AP MLD selects to send the TWT setup frame to the AP MLD, a subsequent process is consistent with an aligned individual TWT SP setup process. In addition, to set up the aligned broadcast TWT SP, the carried TWT element should be a broadcast TWT element. When the non-AP MLD initiates a request for setting up the aligned broadcast TWT SPs on the plurality of links to the AP MLD, the non-AP MLD sends a TWT setup frame that carries one or more broadcast TWT elements. After receiving the TWT setup frame, the AP MLD determines whether to accept the request. If the AP MLD accepts the request, a same TWT element is carried in a beacon for parameter broadcast, and a subsequent process is the same as that in the previous method.

It should be understood that meanings of the fields and the subfields are not specifically defined in embodiments of this application.

It should be further understood that a value of a sequence number of each of the foregoing processes does not mean an order of an execution sequence. The execution sequence of each process should be determined based on a function and internal logic of each process, and should not be construed as any limitation on the implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, the method and the operation implemented by the device (such as the transmit device or the receive device) may also be implemented by a component (for example, a chip or a circuit) of the device.

The foregoing describes in detail the methods provided in embodiments of this application with reference to FIG. 1 to FIG. 17. The foregoing methods are mainly described from a perspective of interaction between the transmit device and the receive device. It may be understood that, to implement the foregoing functions, the transmit device and the receive device include corresponding hardware structures and/or software modules for performing the functions.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

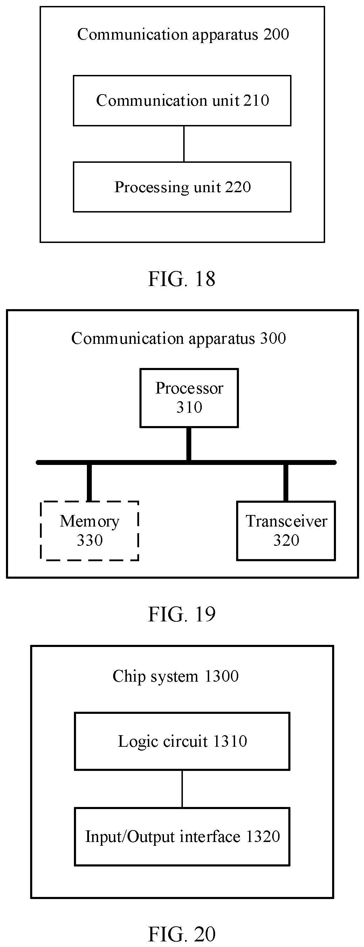

The following describes in detail communication apparatuses provided in embodiments of this application with reference to FIG. 18 to FIG. 20. It should be understood that descriptions of apparatus embodiments correspond to the descriptions of the method embodiments. Therefore, for content that is not described in detail, refer to the foregoing method embodiments. For brevity, some content is not described again. In embodiments of this application, functional modules of a transmit device or a receive device may be obtained through division based on the foregoing method examples. For example, functional modules may be obtained through division based on functions, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used. An example in which each functional module is obtained through division based on each corresponding function is used below for description.

The foregoing describes in detail the data transmission method provided in this application, and the following describes communication apparatuses provided in this application. In a possible implementation, the apparatus is configured to implement the steps or procedures corresponding to the receive device in the foregoing method embodiments. In another possible implementation, the apparatus is configured to implement the steps or procedures corresponding to the transmit device in the foregoing method embodiments.

FIG. 18 is a schematic block diagram of a communication apparatus 200 according to an embodiment of this application. As shown in FIG. 18, the apparatus 200 may include a communication unit 210 and a processing unit 220. The communication unit 210 may communicate with the outside, and the processing unit 220 is configured to perform data processing. The communication unit 210 may also be referred to as a communication interface or a transceiver unit.

In a possible design, the apparatus 200 may implement the steps or procedures performed by the transmit device in the foregoing method embodiments. The processing unit 220 is configured to perform processing-related operations of the transmit device in the foregoing method embodiments, and the communication unit 210 is configured to perform sending-related operations of the transmit device in the foregoing method embodiments.

In still another possible design, the apparatus 200 may implement the steps or procedures performed by the receive device in the foregoing method embodiments. The communication unit 210 is configured to perform receiving-related operations of the receive device in the foregoing method embodiments, and the processing unit 220 is configured to perform processing-related operations of the receive device in the foregoing method embodiments.

It should be understood that, the apparatus 200 herein is presented in a form of functional units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 200 may be specifically the transmit device in the foregoing embodiments, and may be configured to perform the procedures and/or steps corresponding to the transmit device in the foregoing method embodiments; or the apparatus 200 may be specifically the receive device in the foregoing embodiments, and may be configured to perform procedures and/or steps corresponding to the receive device in the foregoing method embodiments. To avoid repetition, details are not described herein again.

The apparatus 200 in the foregoing solutions has functions of implementing the corresponding steps performed by the transmit device in the foregoing methods, or the apparatus 200 in the foregoing solutions has functions of implementing the corresponding steps performed by the receive device in the foregoing methods. The function may be implemented by hardware, or may be implemented by hardware executing corresponding software. The hardware or software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit such as the processing unit may be replaced with a processor, to separately perform the sending/receiving operations and the processing-related operations in the method embodiments.

In addition, the communication unit may alternatively be a transceiver circuit (which may include, for example, a receiving circuit and a transmitter circuit), and the processing unit may be a processing circuit. In this embodiment of this application, the apparatus in FIG. 18 may be the AP or the STA in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 19 is a schematic block diagram of a communication apparatus 300 according to an embodiment of this application. The apparatus 300 includes a processor 310 and a transceiver 320. The processor 310 and the transceiver 320 communicate with each other through an internal connection path. The processor 310 is configured to execute instructions, to control the transceiver 320 to send a signal and/or receive a signal.

Optionally, the apparatus 300 may further include a memory 330, and the memory 330 communicates with the processor 310 and the transceiver 320 through the internal connection path. The memory 330 is configured to store the instructions, and the processor 310 may execute the instructions stored in the memory 330. In a possible implementation, the apparatus 300 is configured to implement the procedures and steps corresponding to the transmit device in the foregoing method embodiments. In another possible implementation, the apparatus 300 is configured to implement the procedures and steps corresponding to the receive device in the foregoing method embodiments.

It should be understood that the apparatus 300 may be specifically the transmit device or the receive device in the foregoing embodiments, or may be a chip or a chip system. Correspondingly, the transceiver 320 may be a transceiver circuit of the chip. This is not limited herein. Specifically, the apparatus 300 may be configured to perform the steps and/or procedures corresponding to the transmit device or the receive device in the foregoing method embodiments. Optionally, the memory 330 may include a read-only memory and a random access memory, and provide the instructions and data for the processor. A part of the memory may further include a non-volatile random access memory. For example, the memory may further store information about a device type. The processor 310 may be configured to execute the instructions stored in the memory. In addition, when the processor 310 executes the instructions stored in the memory, the processor 310 is configured to perform the steps and/or procedures in the foregoing method embodiments corresponding to the transmit device or the receive device.

In an implementation process, steps in the foregoing methods may be implemented by using a hardware integrated logic circuit in the processor, or by using instructions in a form of software. The steps of the methods disclosed with reference to embodiments of this application may be directly executed and accomplished by using a hardware processor, or may be executed and accomplished by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments may be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly executed and accomplished by using a hardware decoding processor, or may be executed and accomplished by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another appropriate type.

It should be noted that when the processor is a general-purpose processor, a DSP, an ASIC, an FPGA or another programmable logic device, a discrete gate or a transistor logic device, or a discrete hardware component, the memory (storage module) may be integrated into the processor. It should further be noted that the memory described in this specification aims to include but is not limited to these memories and any memory of another appropriate type.

FIG. 20 is a schematic diagram of a chip system 1300 according to an embodiment of this application. The chip system 1300 (or may also be referred to as a processing system) includes a logic circuit 1310 and an input/output interface (input/output interface) 1320.

The logic circuit 1310 may be a processing circuit in the chip system 1300. The logic circuit 1310 may be coupled and connected to a storage unit, and invoke instructions in the storage unit, so that the chip system 1300 can implement the methods and the functions in embodiments of this application. The input/output interface 1320 may be an input/output circuit in the chip system 1300, and outputs information processed by the chip system 1300, or inputs to-be-processed data or signaling into the chip system 1300 for processing.

Specifically, for example, if the chip system 1300 is installed in a transmit device, the logic circuit 1310 is coupled to the input/output interface 1320, and the logic circuit 1310 may send a first frame through the input/output interface 1320. The first frame may be generated by the logic circuit 1310. For another example, if the chip system 1300 is installed in a receive device, the logic circuit 1310 is coupled to the input/output interface 1320, the logic circuit 1310 may receive a first frame through the input/output interface 1320, and the logic circuit 1320 determines information about a TWT SP on a link based on the first frame.

In a solution, the chip system 1300 is configured to implement the operations performed by the transmit device in the foregoing method embodiments.

For example, the logic circuit 1310 is configured to implement processing-related operations performed by the transmit device in the foregoing method embodiments, for example, the processing-related operation performed by the transmit device in the embodiment shown in FIG. 8, FIG. 16, or FIG. 17, and the input/output interface 1320 is configured to implement sending and/or receiving-related operations performed by the transmit device in the foregoing method embodiments, for example, the processing-related operation performed by the transmit device in the embodiment shown in FIG. 8, FIG. 16, or FIG. 17.

In another solution, the chip system 1300 is configured to implement the operations performed by the receive device in the foregoing method embodiments.

For example, the logic circuit 1310 is configured to implement processing-related operations performed by the receive device in the foregoing method embodiments, for example, the processing-related operation performed by the receive device in the embodiment shown in FIG. 8, FIG. 16, or FIG. 17, and the input/output interface 1320 is configured to implement sending and/or receiving-related operations performed by the receive device in the foregoing method embodiments, for example, the processing-related operation performed by the receive device in the embodiment shown in FIG. 8, FIG. 16, or FIG. 17.

In addition, this application further provides a computer-readable storage medium. The computer-readable storage medium stores computer instructions. When the computer instructions are run on a computer, the operations and/or procedures performed by the transmit device or the receive device in the method embodiments of this application are performed.

This application further provides a computer program product. The computer program product includes computer program code or instructions. When the computer program code or the instructions is/are run on a computer, the operations and/or procedures performed by the transmit device or the receive device in the method embodiments of this application are performed.

In addition, this application further provides a communication system, including the transmit device and the receive device in embodiments of this application.

It should further be noted that the memory described in this specification aims to include but is not limited to these memories and any memory of another appropriate type.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be further understood that ordinal numbers such as "first" and "second" mentioned in embodiments of this application are intended to distinguish between a plurality of objects, but not to limit sizes, content, an order, a time sequence, priorities, or importance of the plurality of objects. For example, first information and second information do not indicate a difference in an information amount, content, a priority, importance, or the like.

It should be further understood that, in this application, "when" and "if" both refer to corresponding processing performed by the network element in an objective case, are not intended to limit time, do not require a determining action to be performed during implementation of the network element, and do not imply that there is any other limitation.

It should be further understood that, in this application, "at least one" means one or more, and "a plurality of" means two or more. "At least one item (piece) of the following" or a similar expression thereof means any combination of these items, including any combination of singular items (pieces) or plural items (pieces). For example, at least one of a, b, or c may represent a, b, c, a and b, a and c, b and c, or a, b, and c.

It should be further understood that, unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. The character "/" generally indicates an "or" relationship between the associated objects. For example, A/B indicates A or B.

It should be further understood that, in embodiments of this application, "B corresponding to A" represents that B is associated with A, and B may be determined based on A. However, it should further be understood that determining A based on B does not mean that B is determined based on A only; that is, B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving a first frame, wherein the first frame comprises a first element, the first element is used to request to set up an individual target wake time TWT service period SP, and the first element comprises first information and second information; the first information indicates a first link on which an individual TWT SP is requested to be set up, the second information indicates N second links on which individual TWT SPs are requested to be set up, the N second individual TWT SPs set up on the N second links need to be aligned with the first individual TWT SP on the first link, and the N second individual TWT SPs one-to-one correspond to the N second links; and the first link and the second link are communication links between a transmit device and a receive device, the N second links are different links, and N is a positive integer;
   setting up the first individual TWT SP on the first link and setting up the N second individual TWT SPs on the N second links based on the first element; and
   performing communication on the corresponding links based on the first individual TWT SP and the N second individual TWT SPs.

2. The method according to claim 1, wherein the first element comprises third information, the third information indicates information about the first individual TWT SP, and the information about the first individual TWT SP comprises a start time of the first individual TWT SP; and
   the setting up the first individual TWT SP on the first link and setting up the N second individual TWT SPs on the N second links based on the first element comprises:

   setting up the first individual TWT SP on the first link based on the information about the first individual TWT SP;
   determining information about the N second individual TWT SPs, wherein the information about the second individual TWT SP comprises a start time of the second individual TWT SP, and the start time of the second individual TWT SP is determined based on the start time of the first individual TWT SP; and

setting up the N second individual TWT SPs on the N second links based on the information about the N second individual TWT SPs.

3. The method according to claim 2, wherein the second individual TWT SP is aligned with the first individual TWT SP after the start time of the second individual TWT SP is determined based on the start time of the first individual TWT SP.

4. The method according to any one of claims 1 to 3, wherein the start time $TWT_j$ of the second individual TWT SP satisfies the following formula:

$$TWT_j = TWT_i + TWT_{offset},$$

wherein
$TWT_i$ is the start time of the first individual TWT SP, and a value of $TWT_{offset}$ is equal to a difference between a time synchronization function TSF timer of the first link and a TSF timer of the second link.

5. The method according to any one of claims 1 to 4, wherein the first element further comprises fourth information, and the fourth information indicates that the first element comprises the second information.

6. The method according to claim 5, wherein when the first element is a TWT element, the fourth information is an aligned TWT field in a control field of the TWT element.

7. The method according to any one of claims 1 to 6, wherein when the first element is the TWT element, the first information is a link ID bitmap field or a link ID field in a TWT parameter information field of the TWT element, and the second information is an aligned TWT bitmap field in the TWT parameter information field.

8. The method according to any one of claims 1 to 7, wherein the method further comprises:
sending a second frame, wherein the second frame comprises a second element, the second element comprises fifth information, and the fifth information indicates that the receive device confirms accepting setup of the individual TWT SPs on the first link and the N second links.

9. A communication method, comprising:

generating a first frame, wherein the first frame comprises a first element, the first element is used to request to set up an individual target wake time TWT service period SP, and the first element comprises first information and second information; the first information indicates a first link on which an individual TWT SP is requested to be set up, the second information indicates N second links on which individual TWT SPs are requested to be set up, the N second individual TWT SPs set up on the N second links need to be aligned with the first individual TWT SP on the first link, and the N second individual TWT SPs one-to-one correspond to the N second links; and the first link and the second link are communication links between a transmit device and a receive device, the N second links are different links, and N is a positive integer; and
sending the first frame.

10. The method according to claim 9, wherein the first element comprises third information, the third information indicates information about the first individual TWT SP, and the information about the first individual TWT SP comprises a start time of the first individual TWT SP.

11. The method according to claim 10, wherein that the second individual TWT SP is aligned with the first individual TWT SP comprises aligning a start time of the first individual TWT SP with the start time of the first individual TWT SP.

12. The method according to any one of claims 9 to 11, wherein the first element further comprises fourth information, and the fourth information indicates that the first element comprises the second information.

13. The method according to claim 12, wherein when the first element is a TWT element, the fourth information is an aligned TWT subfield in a control field of the TWT element.

14. The method according to any one of claims 9 to 13, wherein when the first element is the TWT element, the first information is a link ID bitmap field or a link ID field in a TWT parameter information field of the TWT element, and the second information is an aligned TWT bitmap subfield in the TWT parameter information field.

15. The method according to any one of claims 9 to 14, wherein the method further comprises:
receiving a second frame, wherein the second frame comprises a second element, the second element comprises fifth information, and the fifth information indicates that the receive device confirms accepting setup of the individual TWT SPs on the first link and the N second links.

16. A communication method, comprising:

receiving a first frame, wherein the first frame comprises M first elements, the first element is used to request to set up an individual target wake time TWT service period SP, and the first element comprises first information and second information; the first information indicates a target link on which an individual TWT SP is requested to be set up, the second information indicates information about the target individual TWT SP on the target link, and M target individual TWT SPs corresponding to the M first elements are aligned; and the target link is a communication link between a transmit device and a receive device, and M is an integer greater than 1;

setting up the M target individual TWT SPs on M target links based on information about the M target individual TWT SPs comprised in the M first elements, wherein the M target links are different links; and

performing communication on the corresponding links based on the M target individual TWT SPs.

17. The method according to claim 16, wherein the first element further comprises third information, and the third information indicates that the first information indicates the target link.

18. The method according to claim 17, wherein when the first element is a TWT element, the third information is an aligned TWT field in a control field of the TWT element.

19. The method according to any one of claims 16 to 18, wherein when the first element is the TWT element, the first information is a link ID bitmap field in a TWT parameter information field of the TWT element, and the second information is the TWT parameter information field.

20. The method according to any one of claims 16 to 18, wherein when the first element is the TWT element, the first information is an aligned TWT bitmap field in a TWT parameter information field of the TWT element, and the second information is the TWT parameter information field.

21. The method according to any one of claims 16 to 20, wherein the method further comprises:
sending a second frame, wherein the second frame comprises a second element, the second element comprises fourth information, and the fourth information indicates that the receive device confirms accepting setup of the individual TWT SPs on the M target links corresponding to the M first elements.

22. A communication method, comprising:

generating a first frame, wherein the first frame comprises M first elements, the first element is used to request to set up an individual wake time TWT service period SP, and the first element comprises first information and second information; the first information indicates a target link on which an individual TWT SP is requested to be set up, the second information indicates information about the target individual TWT SP on the target link, and M target individual TWT SPs corresponding to the M first elements are aligned; and the target link is a communication link between a transmit device and a receive device, and M is an integer greater than 1; and
sending the first frame.

23. The method according to claim 22, wherein the information about the target individual TWT SP comprises a start time of the target individual TWT SP, and the start time $TWT_j$ of the target individual TWT SP satisfies the following formula:

$$TWT_j = TWT_i + TWT_{offset},$$

wherein
$TWT_i$ is a moment at which the start time of the target individual TWT SP is mapped to a time axis of a reference link, a value of $TWT_{offset}$ is equal to a difference between a TSF timer of the reference link and a TSF timer of the target link, and the reference link is any link in communication links between the transmit device and the receive device.

24. The method according to claim 22 or 23, wherein the first element further comprises third information, and the third information indicates that the target link exists in the first information.

25. The method according to claim 24, wherein when the first element is a TWT element, the third information is an aligned TWT field in a control field of the TWT element.

26. The method according to any one of claims 22 to 25, wherein when the first element is the TWT element, the first information is a link ID bitmap field in a TWT parameter information field of the TWT element, and the second information is the TWT parameter information field.

27. The method according to any one of claims 22 to 26, wherein the method further comprises:
receiving a second frame, wherein the second frame comprises a second element, the second element comprises fourth information, and the fourth information indicates that the receive device confirms accepting setup of the individual TWT SPs on M target links corresponding to the M first elements.

28. A communication apparatus, comprising:

a communication unit, configured to receive a first frame, wherein the first frame comprises a first element, the first element is used to request to set up an individual target wake time TWT service period SP, and the first element comprises first information and second information; the first information indicates a first link on which an individual TWT SP is requested to be set up, the second information indicates N second links on which individual TWT SPs are requested to be set up, the N second individual TWT SPs set up on the N second links need to be aligned with the first individual TWT SP on the first link, and the N second individual TWT SPs one-to-one correspond to the N second links; and the first link and the second link are communication links between a transmit device and a receive device, the N second links are different links, and N is a positive integer; and
a processing unit, configured to set up the first individual TWT SP on the first link and set up the N second individual TWT SPs on the N second links based on the first element, wherein the processing unit is further configured to perform communication on the corresponding links based on the first individual TWT SP and the N second individual TWT SPs.

29. A communication apparatus, comprising:

a processing unit, configured to generate a first frame, wherein the first frame comprises a first element, the first element is used to request to set up an individual target wake time TWT service period SP, and the first element comprises first information and second information; the first information indicates a first link on which an individual TWT SP is requested to be set up, the second information indicates N second links on which individual TWT SPs are requested to be set up, the N second individual TWT SPs set up on the N second links need to be aligned with the first individual TWT SP on the first link, and the N second individual TWT SPs one-to-one correspond to the N second links; and the first link and the second link are communication links between a transmit device and a receive device, the N second links are different links, and N is a positive integer; and
a communication unit, configured to send the first frame.

30. A communication apparatus, comprising:

a communication unit, configured to receive a first frame, wherein the first frame comprises M first elements, the first element is used to request to set up an individual TWT SP, and the first element comprises first information and second information; the first information indicates a target link on which an individual target wake time TWT service period SP is requested to be set up, the second information indicates information about the target individual TWT SP on the target link, and M target individual TWT SPs corresponding to the M first elements are aligned; and the target link is a communication link between a transmit device and a receive device, and M is an integer greater than 1; and
a processing unit, configured to set up the M target individual TWT SPs on M target links based on information about the M target individual TWT SPs comprised in the M first elements, wherein the M target links are different links, wherein
the processing unit is further configured to perform communication on the corresponding links based on the M target individual TWT SPs.

31. A communication apparatus, comprising:

a processing unit, configured to generate a first frame, wherein the first frame comprises M first elements, the first element is used to request to set up an individual TWT SP, and the first element comprises first information and second information; the first information indicates a target link on which an individual wake time TWT service period SP is requested to be set up, the second information indicates information about the target individual TWT SP on the target link, and M target individual TWT SPs corresponding to the M first elements are aligned; and the target link is a communication link between a transmit device and a receive device, and M is an integer greater than 1; and
a communication unit, configured to send the first frame.

32. A communication apparatus, comprising a processor, configured to execute computer instructions stored in a memory, so that the apparatus performs the method according to any one of claims 1 to 8, or so that the apparatus performs the method according to any one of claims 9 to 15, or so that the apparatus performs the method according to any one of claims 16 to 21, or so that the apparatus performs the method according to any one of claims 22 to 27.

33. A computer-readable storage medium, wherein the computer-readable storage medium stores computer instructions; and when the computer instructions are run on a computer, the method according to any one of claims 1 to 8 is performed, or the method according to any one of claims 9 to 15 is performed, or the method according to any one of claims 16 to 21, or the method according to any one of claims 22 to 27 is performed.

34. A chip, wherein the chip comprises a processor and a communication interface; and the processor reads, through the communication interface, instructions stored in a memory, to perform the method according to any one of claims 1 to 8, or perform the method according to any one of claims 9 to 15, or perform the method according to any one of claims 16 to 21, or perform the method according to any one of claims 22 to 27.

FIG. 1

FIG. 2

FIG. 3

FIG. 4

| Element ID | Length | Control | TWT parameter information |
|---|---|---|---|

Octets 1 1 1 6

| NDP paging indicator | Responder power management mode | Negotiation type | TWT information frame disabled | Wake duration unit | Link ID bitmap present | Reserved |
|---|---|---|---|---|---|---|

Bits 1 1 2 1 1 1 1

FIG. 5

| Request type | Target wake time | TWT group assignment | Nominal minimum TWT wake duration | TWT wake interval mantissa | TWT channel | NDP paging (optional) | Link ID bitmap |
|---|---|---|---|---|---|---|---|

Octets      1        0 or 8      0, 3, or 8      1       2       1       0 or 4      0 or 2

FIG. 6

| Request type | Target wake time | Nominal minimum TWT wake duration | TWT wake interval mantissa | Broadcast TWT channel | Restricted TWT traffic information |
|---|---|---|---|---|---|
| | | | | | |

Octets     2          2          1          2          2          0 or 3

## FIG. 7

| Transmit end device |
| Receive end device |

S810: Generate a first frame

S820: Send the first frame

S830: Set up a first individual TWT SP on a first link and set up N second individual TWT SPs on N second links based on first signaling

S840: Perform communication on the corresponding links based on the first individual TWT SP and the N second individual TWT SPs

## FIG. 8

FIG. 9

Newly added field

| Request type | Target wake time | TWT group assignment | Nominal minimum TWT wake duration | TWT wake interval mantissa | TWT channel | NDP paging (optional) | Link ID bitmap | Aligned TWT bitmap |
|---|---|---|---|---|---|---|---|---|

FIG. 10

FIG. 11

Newly added field

Fields obtained by modifying an original link ID bitmap field

| Request type | Target wake time | TWT group assignment | Nominal minimum TWT wake duration | TWT wake interval mantissa | TWT channel | NDP paging (optional) | Link ID | Reserved | Aligned TWT bitmap |

Previously
reserved field

| NDP paging indicator | Responder power management mode | Negotiation type | TWT information frame disabled | Wake duration unit | Link ID bitmap present | Aligned TWT |
|---|---|---|---|---|---|---|

FIG. 12

| NDP paging indicator | Responder power management mode | Negotiation type | TWT information frame disabled | Wake duration unit | Link ID bitmap present | Aligned TWT | Reserved |
|---|---|---|---|---|---|---|---|

FIG. 13

Newly added fields

| Request type | Target wake time | TWT group assignment | Nominal minimum TWT wake duration | TWT wake interval mantissa | TWT channel | NDP paging (optional) | Link ID bitmap | Aligned TWT | Reserved | Aligned TWT bitmap |
|---|---|---|---|---|---|---|---|---|---|---|
| | | | | | | | | 2 bits | 6 bits | |

FIG. 14

Fields obtained by
modifying an original
link ID bitmap field

| Request type | Target wake time | TWT group assignment | Nominal minimum TWT wake duration | TWT wake interval mantissa | TWT channel | NDP paging (optional) | Link ID | Aligned TWT | Reserved | Aligned TWT bitmap |
|---|---|---|---|---|---|---|---|---|---|---|
| | | | | | | | 4 bits | 2 bits | 2 bits | |

FIG. 15

```
┌─────────────────────┐              ┌─────────────────────┐
│ Transmit end device │              │  Receive end device │
└─────────────────────┘              └─────────────────────┘
           │                                     │
┌──────────────────────────────┐                 │
│ S1610: Generate a first frame │                │
└──────────────────────────────┘                 │
           │                                     │
           ├────── S1620: First frame ──────────▶│
           │                                     │
           │      ┌──────────────────────────────────────────┐
           │      │ S1630: Set up N aligned second individual │
           │      │ TWT SPs on N second links by using a first│
           │      │        link as a reference link          │
           │      └──────────────────────────────────────────┘
           │                                     │
┌────────────────────────────────────────────────────────────┐
│ S1640: Perform communication on the corresponding links     │
│         based on the N second individual TWT SPs            │
└────────────────────────────────────────────────────────────┘
           │                                     │
           │                                     │
```

FIG. 16

```
┌─────────────────────┐              ┌─────────────────────┐
│ Transmit end device │              │  Receive end device │
└─────────────────────┘              └─────────────────────┘
           │                                     │
┌──────────────────────────────┐                 │
│ S1710: Generate a first frame │                │
└──────────────────────────────┘                 │
           │                                     │
           ├────── S1720: Send the first frame ──▶│
           │                                     │
           │      ┌──────────────────────────────────────────┐
           │      │ S1730: Set up M first individual TWT SPs  │
           │      │ on M first links based on information about│
           │      │ the M first individual TWT SPs included in│
           │      │        M pieces of first signaling        │
           │      └──────────────────────────────────────────┘
           │                                     │
┌────────────────────────────────────────────────────────────┐
│ S1740: Perform communication on the corresponding links     │
│         based on the M first individual TWT SPs            │
└────────────────────────────────────────────────────────────┘
           │                                     │
           │                                     │
```

FIG. 17

Communication apparatus 200

Communication unit 210

Processing unit 220

FIG. 18

Communication apparatus 300

Processor
310

Memory
330

Transceiver
320

FIG. 19

Chip system 1300

Logic circuit 1310

Input/Output interface 1320

FIG. 20

## INTERNATIONAL SEARCH REPORT

| International application No. |
|---|
| **PCT/CN2023/124328** |

| A. | CLASSIFICATION OF SUBJECT MATTER |
|---|---|

H04W76/15(2018.01)i;  H04L65/612(2022.01)i

According to International Patent Classification (IPC) or to both national classification and IPC

| B. | FIELDS SEARCHED |
|---|---|

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC, ETSI, IETF, WOTXT: 单播, 对齐, 多链路设备, 目标唤醒时间, 同步, 一致, broadcast, device, individual, link, MLD, multicast, period, service, SP, target, time, TWT, unicast, wake, TWT?SP, wi-fi, align +, multi-link

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022132030 A1 (PANASONIC INTELLECTUAL PROPERTY CORPORATION OF AMERICA) 23 June 2022 (2022-06-23) description, pages 7-39, and figures 1-35 | 1-34 |
| A | CN 113630725 A (HUAWEI TECHNOLOGIES CO., LTD.) 09 November 2021 (2021-11-09) entire document | 1-34 |
| A | US 2020359327 A1 (CISCO TECHNOLOGY, INC.) 12 November 2020 (2020-11-12) entire document | 1-34 |
| A | WO 2022077241 A1 (BEIJING XIAOMI MOBILE SOFTWARE CO., LTD.) 21 April 2022 (2022-04-21) entire document | 1-34 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 November 2023** | **22 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/124328**

| Patent document cited in search report | | | Publication date (day/month/year) | Patent family member(s) | | | Publication date (day/month/year) |
|---|---|---|---|---|---|---|---|
| WO | 2022132030 | A1 | 23 June 2022 | EP | 4265029 | A1 | 25 October 2023 |
| | | | | KR | 20230117148 | A | 07 August 2023 |
| | | | | CN | 116636252 | A | 22 August 2023 |
| CN | 113630725 | A | 09 November 2021 | WO | 2021223683 | A1 | 11 November 2021 |
| | | | | BR | 112022022584 | A2 | 13 December 2022 |
| | | | | IN | 202227063641 | A | 16 December 2022 |
| | | | | EP | 4142314 | A1 | 01 March 2023 |
| | | | | US | 2023082270 | A1 | 16 March 2023 |
| | | | | VN | 94035 | A | 25 April 2023 |
| US | 2020359327 | A1 | 12 November 2020 | None | | | |
| WO | 2022077241 | A1 | 21 April 2022 | EP | 4231740 | A1 | 23 August 2023 |
| | | | | CN | 115669120 | A | 31 January 2023 |
| | | | | IN | 202347033684 | A | 16 June 2023 |
| | | | | KR | 20230117148 | A | 07 August 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211262326
- CN 202211330156